# EUROPEAN PATENT APPLICATION

(11) **EP 4 629 725 A1**
(43) Date of publication of application: **08.10.2025**
(21) Application number: 22966909.8
(22) Date of filing: 01.12.2022
(51) Int. Cl.: H04W 72/12, H04W 68/02

(54) **SERVICE SCHEDULING METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: HONG, Feng, Dongguan, Guangdong 523860 (CN); LU, Liuming, Dongguan, Guangdong 523860 (CN); HOU, Ronghui, Dongguan, Guangdong 523860 (CN); LUO, Chaoming, Dongguan, Guangdong 523860 (CN)
(74) Representative: Grassi, Stefano
(86) International application number: PCT/CN2022/135976
(87) International publication number: WO 2024/113320

(57) **Abstract**

Provided in the embodiments of the present application are a service scheduling method, and a device and a storage medium. The method comprises: according to a service type of a first service and/or a first priority of the first service and a second priority of each CRB among CRBs in a first NDC, a first NAN device determining at least one first CRB corresponding to the first service, wherein the first service is scheduled in the at least one first CRB, and the first NAN belongs to the first NDC. Therefore, differentiated scheduling of a service is realized.

## Description

### TECHNICAL FIELD

The embodiments of the present disclosure relate to the technical field of mobile communication, particularly to a method for service scheduling, an apparatus, a device and a storage medium.

### BACKGROUND

The wireless local area network (LAN) industry is currently one of the fastest developing industries in the whole data communication field. As a supplement and extension of the traditional wired local area network, the wireless LAN solution has been favored by the home network users, small and medium-sized office users, a wide range of enterprise users and telecommunication operators due to its advantages of flexibility, mobility, scalability and low investment cost, and has gained rapid application.

The wireless fidelity (WI-FI) Alliance has formulated the standard specification of Neighbor Awareness Network (NAN). This standard specification aims to discover quickly the services provided by surrounding devices with low power consumption before establishing a connection.

With the rapid development of wireless network technology, people's demand for the network quality is constantly increasing. The traffic of many services with different characteristics such as video, game, and wearable device is constantly increasing. Some services require low latency, some services require high reliability, and some services require high throughput, etc., which requires the NAN device in the NAN network to be able to support different types of services.

### SUMMARY

The embodiment of the present disclosure provides a method for service scheduling, an apparatus, a device and a storage medium.

The method for service scheduling provided by an embodiment of the present disclosure includes following operations.

The first Neighbor Awareness Network (NAN) device determines at least one first Common Resource Block (CRB) corresponding to a first service based on a service type and/or a first priority of the first service and a second priority of each of at least one CRB of a first NAN data cluster (NDC), herein the first service is scheduled within the at least one first CRB, and the first NAN belongs to the first NDC.

A first NAN device according to an embodiment of the present disclosure includes a first determination unit.

The first determination is configured to determine at least one first Common Resource Block (CRB) corresponding to a first service based on a service type and/or a first priority of the first service and a second priority of each of at least one CRB of a first NAN data cluster (NDC), herein the first service is scheduled within the at least one first CRB, and the first NAN belongs to the first NDC.

The communication device provided by the embodiment of the disclosure includes a processor and a memory. The memory is configured to store a computer program, and the processor is configured to call and run the computer program stored in the memory, to enable the communication device to perform the above-mentioned method.

The chip provided by an embodiment of the present disclosure is used for implementing the above-mentioned method for service scheduling.

Specifically, the chip includes a processor, herein the processor is used to call and run a computer program from a memory, which enables a device arranged with the chip to perform the above-mentioned method for service scheduling.

The computer-readable storage medium provided by the embodiments of the present disclosure is used for storing a computer program, and the running of the computer program enables the computer to perform the above-mentioned method for service scheduling.

The computer program product provided by the embodiments of the present disclosure includes a computer program instruction, and the running of the computer program product enables a computer to perform the above-mentioned method for service scheduling.

The computer program provided by an embodiment of the present disclosure, when running on the computer, causes the computer to perform the above-mentioned method for service scheduling.

According to the above technical solutions, the first NAN device determines the first CRB for scheduling the first service according to the service type and/or the first priority of the first service and the second priority of each of the first NDC, so that the NAN device determines the CRB for service scheduling based on the priority of the service and the priority of the CRB, thus the CRB may be selected for the current service according to the priority of the current service without blindly determining the CRB for service scheduling in the NDC schedule, thereby implementing that the resources are scheduled differentially according to the priority of the current service, and ensuring the differentiated scheduling of the service.

### BRIEF DESCRIPTION OF THE DRAWINGS

The drawings described herein are used to provide a further understanding of the disclosure and form a part of the disclosure. The schematic embodiments of the disclosure and the description thereof are used to explain the disclosure and do not constitute an improper limitation of the application. In the drawings:
FIG. 1 is an optional schematic diagram of an application scenario according to an embodiment of the present disclosure;
FIG. 2 is an optional schematic diagram of a NAN cluster according to an embodiment of the present disclosure;
FIG. 3 is an optional schematic diagram of a DW schedule according to an embodiment of the present disclosure;
FIG. 4 is an optional flow diagram of a method for service scheduling according to an embodiment of the present disclosure;
FIG. 5 is an optional flow diagram of a method for service scheduling according to an embodiment of the present disclosure;
FIG. 6 is a schematic diagram of an optional relationship between an NAN Data Link (NDL) and an NAN Data Path (NDP) according to an embodiment of the present disclosure;
FIG. 7 is an optional schematic diagram of an NDC according to an embodiment of the present disclosure;
FIG. 8 is an optional flow diagram of a method for service scheduling according to an embodiment of the present disclosure;
FIG. 9 is an optional flow diagram of a method for service scheduling according to an embodiment of the present disclosure;
FIG. 10 is an optional schematic diagram of a NAN cluster according to an embodiment of the present disclosure;
FIG. 11 is an optional schematic diagram of an NDC schedule according to an embodiment of the present disclosure;

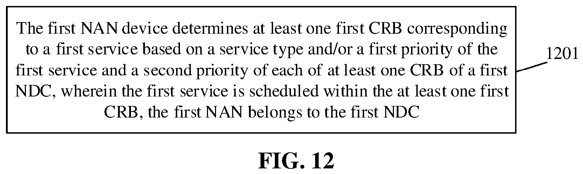

FIG. 12 is an optional flow diagram of a method for service scheduling according to an embodiment of the present disclosure;
FIG. 13A is an optional schematic diagram of a NDC schedule according to an embodiment of the present disclosure;
FIG. 13B is an optional schematic diagram of an NDC schedule according to an embodiment of the present disclosure;
FIG. 14 is an optional flow diagram of a method for service scheduling according to an embodiment of the present disclosure;

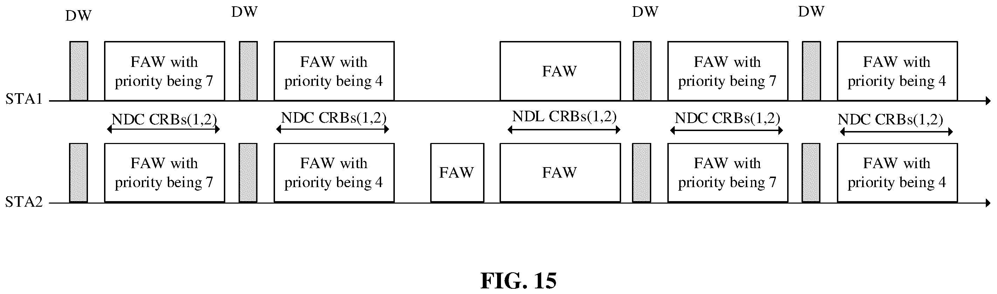

FIG. 15 is an optional schematic diagram of an NDC schedule according to an embodiment of the present disclosure;
FIG. 16 is a schematic diagram of an optional format of the SDF according to an embodiment of the present disclosure;
FIG. 17 is a schematic diagram of an optional format of the service descriptor attribute according to an embodiment of the present disclosure;
FIG. 18 is a schematic diagram of an optional format of the NAN available attribute according to an embodiment of the present disclosure;
FIG. 19 is a schematic diagram of an optional format of the availability entry subfield according to an embodiment of the present disclosure;
FIG. 20 is a schematic diagram of an optional format of the attribute control field according to an embodiment of the present disclosure;
FIG. 21 is a schematic diagram of an optional format of the NDC attribute according to an embodiment of the present disclosure;
FIG. 22 is a schematic diagram of an optional format of the schedule entry subfield according to an embodiment of the present disclosure;
FIG. 23 is an optional schematic diagram of an NDC schedule according to an embodiment of the present disclosure;
FIG. 24 is an optional schematic diagram of an NDC schedule according to an embodiment of the present disclosure;
FIG. 25 is a schematic diagram of an optional format of the attribute control field in the NDC attribute according to an embodiment of the present disclosure;
FIG. 26 is an optional schematic diagram of an NDC according to an embodiment of the present disclosure;
FIG. 27 is an optional flow diagram of a method for service scheduling according to an embodiment of the present disclosure;
FIG. 28 is an optional flow diagram of a method for service scheduling according to an embodiment of the present disclosure;
FIG. 29 is an optional flow diagram of a method for service scheduling according to an embodiment of the present disclosure;
FIG. 30 is an optional schematic diagram of an NDC according to an embodiment of the present disclosure;
FIG. 31 is an optional schematic diagram of an NDC according to an embodiment of the present disclosure;
FIG. 32 is an optional structural schematic diagram of the first NAN device according to an embodiment of the present disclosure;
FIG. 33 is a schematic structural diagram of a communication device according to an embodiment of the present disclosure;
FIG. 34 is a schematic structural diagram of a chip according to an embodiment of the present disclosure;
FIG. 35 is a schematic block diagram of a communication system according to an embodiment of the present disclosure.

### DETAILED DESCRIPTION

The description of the technical solutions of the embodiments of the disclosure will be provided below with reference to the accompanying drawings in the embodiments of the disclosure, and it is apparent that the described embodiments are part of the embodiments of the disclosure, and not all of them. Based on the embodiments of the disclosure, any other embodiments obtained by those of ordinary skill in the art without making creative effort falls within the scope of protection of the disclosure.

The technical solution of the embodiments of the present disclosure can be applied to various communication systems, such as Wireless Local Area Networks (WLAN), Wireless Fidelity (WI-FI), or other communication systems. The frequency bands that can be supported by the WLAN may include, but are not limited to, a low frequency band (2.4 GHz, 5 GHz, 6 GHz), a high frequency band (60 GHz).

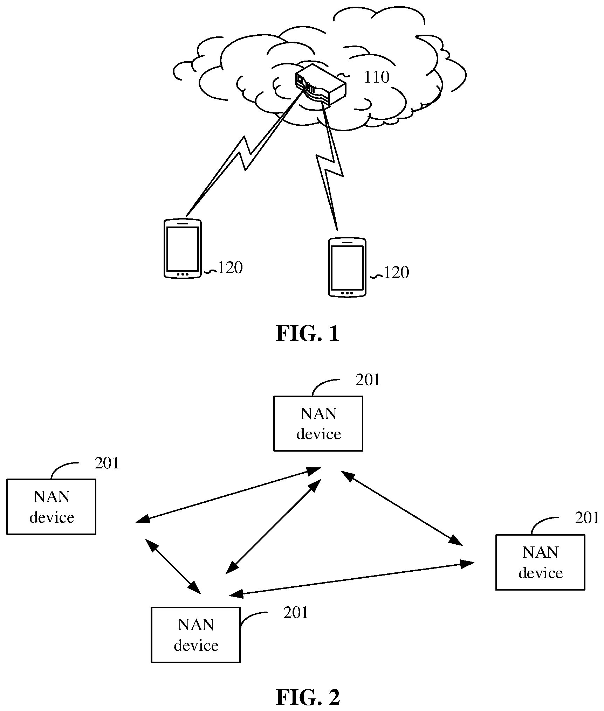

FIG. 1 is an example of a communication system architecture according to an embodiment of the present disclosure.

As illustrated in FIG. 1, the communication system 100 may include an access point (AP) 110, and a station (STA) 120 accessing to a network through the AP 110. In some scenarios, the AP 110 may be referred to as an AP STA, i.e., the AP 110 is also a STA in a certain sense. In some scenarios, the STA 120 may be referred to as a non-AP STA. In some scenarios, the STA 120 may include an AP STA and a non-AP STA. The communication in the communication system 100 may include: the communication between the AP 110 and the STA 120, or the communication between the STA 120 and the STA 120, or the communication between the STA 120 and a peer STA. The peer STA may refer to a peer device communicating with the STA 120, for example, the peer STA may be an AP or a non-AP STA.

The AP 110 may be used as a bridge connecting a wired network and a wireless network, and its main function is to connect various wireless network clients together, and then connect the wireless network to Ethernet. The AP 110 may be a terminal device (such as a mobile phone) or a network device (such as a router) with a WI-FI chip.

It is to be noted that the role of the STA 120 in the communication system is not fixed. That is, the role of the STA 120 in the communication system can be switched between the AP and the STA. For example, in some scenarios, when the mobile phone is connected to the route, the mobile phone is an STA, and when the mobile phone is a hotspot for other mobile phones, the mobile phone acts as an AP.

In some embodiments, the AP 110 and the STA 120 may be devices applied in the Internet of Vehicles, Internet of Things (IoT) nodes or sensors in the IoT, smart cameras, smart remote controllers, smart meters or smart water meters in the smart home, and sensors or the like in the smart city.

In some embodiments, the AP 110 may be a device that supports the 802.11be standard. The AP may be a device supporting various current 802.11 family WLAN standards (such as 802.11ax, 802.11ac, 802.11n, 802.11g, 802.11b, and 802.11a) and future 802.11 family WLAN standards. In some embodiments, the STA 120 may support the 802.11be standard. The STA may also support various current 802.11 family WLAN standards (such as 802.11ax, 802.11ac, 802.11n, 802.11g, 802.11b, and 802.11a) and future 802.11 family WLAN standards.

In some embodiments, the AP 110 and/or the STA 120 may be deployed on land, including indoor or outdoor, hand-held, wearable or vehicle-mounted; and may also be deployed on the water surface (such as ships); and may also be deployed in the air (such as airplanes, balloons and artificial satellites).

In some embodiments, the STA 120 may be a Mobile Phone, a tablet computer (Pad), a computer with a wireless transceiver function, a Virtual Reality (VR) device, or an Augmented Reality (AR) device, a wireless device in industrial control, a set-top box, a wireless device of self driving, a wireless device in remote medical, a wireless device in smart grid, a wireless device in transportation safety, a wireless device in smart city or a wireless device in a smart home, a vehicle-mounted communication device, a wireless communication chip/application specific integrated circuit (ASIC)/System on Chip (SoC), etc.

For example, the STA 120 may also be a wearable device. The wearable device may also be referred to as the wearable smart device, which is a general term for the wearable device developed by intelligently designing the daily wear (such as glasses, gloves, watches, clothing and shoes) by applying the wearable technology. The wearable device is a portable device that is worn directly on the body or integrated into the user's clothes or accessories. The wearable device is not only a hardware device, but also implements the powerful functions through the software support, data interaction and cloud interaction. Generalized wearable smart device includes devices having following characteristics: comprehensive functions, large size, and all or part of functions may be implemented without relying on the smart phone, (for example, a smart watch or smart glasses), and devices focus on a certain type of application functions only and needed to be used in conjunction with other devices such as a smart phone, for example, various types of smart bracelets and smart jewelry for monitoring the physical signs.

It is to be understood that FIG. 1 is merely an example of the present disclosure and should not be construed as a limitation of the present disclosure. For example, FIG. 1 exemplarily illustrates one AP and two STA. In some embodiments, the communication system 100 may include a plurality of APs and other numbers of STAs, which is not limited in the embodiments of the present disclosure.

It is to be noted that FIG. 1, FIG. 2A and FIG. 2B merely illustrate the systems applicable to the present disclosure by way of example, and of course, the methods illustrated in the embodiments of the present disclosure may also be applied to other systems. In addition, the terms "system" and "network" in the present disclosure are often used interchangeably herein. The term "and/or" herein only describes an association relationship of associated objects and represents that three relationships may exist. For example, A and/or B may represent the following three cases: only A exists, both A and B exist, and only B exists. Further, the character "/" herein generally means that the associated objects has an "or" relationship. It is further to be understood that the "indication" mentioned in the embodiments of the present disclosure may be a direct indication, or an indirect indication, and may also represent that there is an association relationship. For example, A indicates B, which may mean that A directly indicates B, for example, B may be acquired through A. It may also mean that A indicates B indirectly, for example, A indicates C, and B may be acquired through C. It may also indicate that there is an association relationship between A and B. It is further to be understood that the "corresponding" mentioned in the embodiments of the present disclosure may indicate that there is a direct correspondence or indirect correspondence between the two items, may also indicate that there is a correlation relationship between the two items, or may indicate a relationship between indicating and being indicated, configuring and being configured, or the like. If is further to be understood that the "predefined" or "predefined rule" mentioned in the embodiments of the present disclosure may be implemented by storing the corresponding codes, tables, or other manners that can be used for indicating relevant information in advance in the device (including, for example, the terminal device and the network device), and the specific implementations thereof are not limited in the present disclosure. For example, "predefined" may refer to being defined in the protocol. It is further to be understood that the "protocol" in the embodiments of the present disclosure may refer to a standard protocol in the field of communication. For example, it may include an LTE protocol, an NR protocol, and related protocols applied in future communication systems, which is not limited in the present disclosure.

In order to facilitate understanding of the technical solutions of the embodiments of the present disclosure, the related technologies of the embodiments of the present disclosure will be described below. As an optional solution, the following related technologies may be arbitrarily combined with the technical solutions of the embodiments of the present disclosure, and all of them belong to the scope of protection of the embodiments of the present disclosure.

### Architecture of the NAN cluster

The NAN cluster is a collection of NAN devices, and these NAN devices share same NAN parameter(s) and synchronize same Discovery Window (DW) schedule. One NAN cluster is uniquely identified by an NAN cluster ID. As illustrated in FIG. 2, one NAN cluster includes four NAN devices 201, and different NAN devices 201 may communication with each other.

DW: a period of periodic time window established by the NAN devices that establish the NAN cluster.

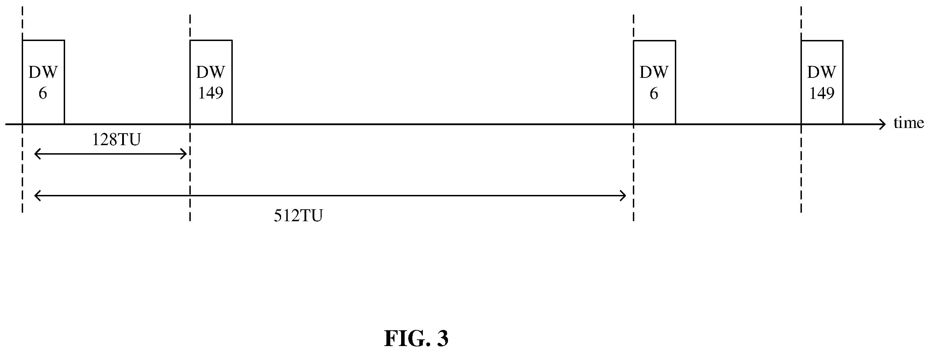

In an example, the DW schedule established by the NAN devices that establish the NAN cluster is illustrated in FIG. 3, and it includes the periodic time windows DW1 and DW2, and one period includes 512 Time Units (TUs), the channel of DW1 is channel 6, the channel of DW2 is channel 149, and the starting position of DW1 and the starting position of DW2 are separated by 128 TUs.

In one NAN cluster, the NAN devices are divided into the following two roles: master; and non-master.

The NAN device with the role of non-master has the following two states: non-sync state and sync state, herein the state of the NAN device is changeable.

The master generates and sends beacon frame(s). The beacon frame(s) includes a synchronization beacon frame and a discovery beacon frame. The Non-master in the non-sync state discards directly the synchronization beacon frame received from the master, and the non-master in the sync state sends the synchronization beacon frame received from the master.

It is to be understood that if a NAN device is a master or a non-master in the sync state, the NAN device may sends the NAN synchronization beacon frame within the DW to maintain the synchronization of the NAN cluster. If a NAN device is a non-master in a non-sync state, the NAN device is not allowed to send the synchronization beacon frame within the DW.

Each NAN device has a NAN master level. The NAN master level consists of three parts: master preference, random factor and NAN interface address. The master preference has the highest proportion among the three parts, as such the higher the master preference value of a NAN device is, the higher the NAN master level of the NAN device is.

There is a special master in a NAN cluster: the anchor master, which is held by the NAN device with the highest master level in the NAN cluster. The function of the anchor master is to broadcast the synchronization beacon frame at the beginning of each DW to announce the Timing Synchronization Function (TSF) and DW schedule of the entire NAN cluster.

### NAN service discovery

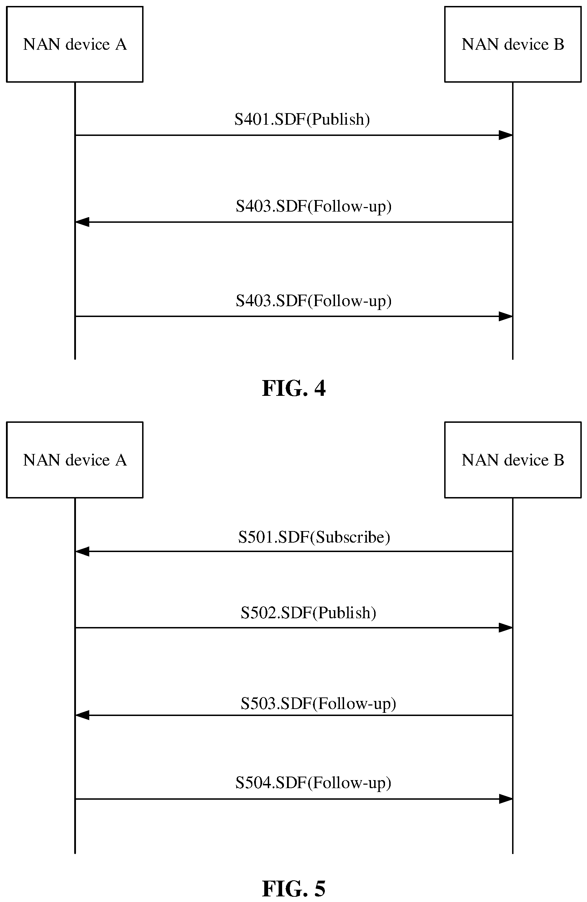

In the DW, all NAN devices may transmit the Service Discovery Frame (SDF), and the service discovery process of the NAN device includes the following two types: an unrequested service publishing flow illustrated in FIG. 4; and the requested service publishing flow illustrated in FIG. 5.

In FIG. 4 and FIG. 5, the NAN device A is the Publisher of the service, and the NAN device B is the Subscriber of the service.

The unrequested service publishing flow is illustrated in FIG. 4. At S401, the NAN device A publishes owned service actively by broadcasting the SDF (Publish), the NAN availability attribute is carried in the SDF to announce one or more Further Availability Windows (FAWs), and the service descriptor attribute is carried in the SDF to announce the filtering condition and other service information. After receiving the SDF (Publish), if the NAN device B needs to subscribe to the service, the NAN device B performs S402 to transmit the unicast SDF to the publisher of the service (Follow-up).

The filtering condition may be used for controlling the distance between the devices for which the service can be discovered, and may be configured to be:
1) discovered only by the close-range device; and
2) without distance limit.

The requested service publishing flow is illustrated in FIG. 5. At S501, the NAN device A (the subscriber of the service) broadcasts the SDF Subscribe actively, and the publisher of the service performs S502 to sends the SDF to the subscriber (Publish) after receiving the SDF, and the subscriber of the service performs S503 to negotiation by using the SDF Follow-up after receiving the SDF sent by the publisher of the service.

### NAN Data Path (NDP) establishment process

The FAW is represented in the NAN as a combination of the time and the channel owned by the NAN device itself. For example, the NAN device has one FAW, which occupies a plurality of channels and occupies one time period or a plurality of time periods of the same period. Therefore, the FAW may be represented by the time and channel.

The CRB is represented in the NAN as the FAW used for communication between the devices. For example, the FAW owned by the NDL and the NDC may be referred to as the CRB. For a NAN device, its CRB is a subset of the FAWs that the NAN supports. In some cases, the CRB may also be understood as the FAW, just the FAW used for NDL.

In order to enable the communication between the pair of NAN devices, a service requires the NDP to be established between the pair of NAN devices. The NDP is the path logically used by the pair of NAN devices to transmit or receive the data frame for a certain service, and does not actually own any resources.

The pair of NAN devices will negotiate to establish an NAN Device Link (NDL). Each NDL includes a certain number of FAWs. The FAWs owned by the NDL are referred to as NDL CRB. The CRB of the NDL is required to be able to support the need for one or more NDPs between the pair of NAN devices. Only one NDL may exist between the pair of NAN devices.

Not all of the NDL CRBs are used for the service communication, and it is the NDC CRB that is actually used for the service communication.

The NDC will also be established at the same time during the process of establishing NDL between the pairs of NAN devices. The NDC also has a certain number of FAWs. These FAWs are referred to as NDC CRBs. The service communication is performed between the pair of NAN devices within the NDC CRBs. Therefore, the NDC CRB is a subset of the NDL CRBs. The NDL CRB and NDC CRB may be understood as the NDL Schedule and NDC Schedule, respectively.

The NDC includes at least two NAN devices belonging to the same NAN cluster, and each NAN device of the NDC at least establishes one NDL with another NAN device of the NDC. The NAN device may join a plurality of NDCs at the same time. However, the NDL between the pair of NAN devices may only join one NDC.

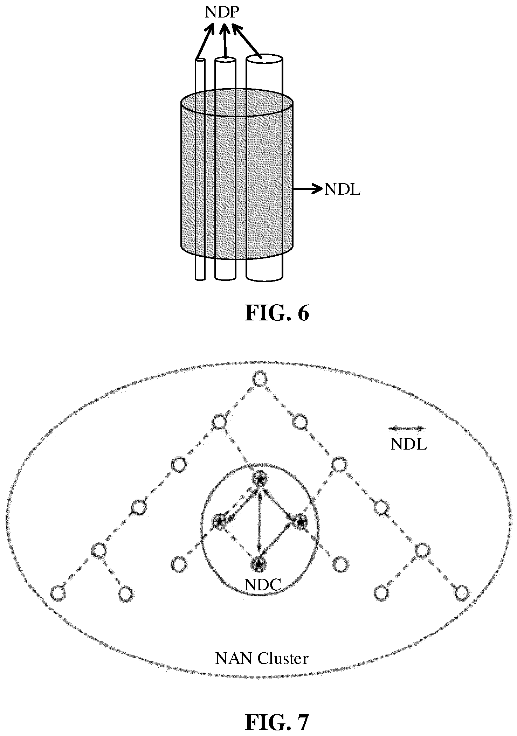

As illustrated in FIG. 6, one NDL includes a plurality of NDPs.

As illustrated in FIG. 7, the NDN cluster 701 includes a plurality of NAN devices, the NDC includes some NAN devices in the NAN cluster, and one NAN device in the NDC at least establishes one NDL with another NAN device in the NDC.

After the service discovery process, the subscriber of the service will send a data path request frame to the publisher of the service within the FAW promised by the publisher of the service. At this case, the subscriber of the service acts as the NDP requester, and accordingly, the publisher of the service is the NDP responder.

If the following conditions are met, the NDP requester needs to start the NDP establishment and the NDL schedule establishment at the same time. If the following conditions are not met, the NDP requester may start the NDP establishment directly:
1) if there is no established NDL schedule between the NDP requester and the NDP responder, or
2) there is an established NDL schedule between the NDP initiator and the NDP responder, but the requirement for the new NDP is not satisfied.

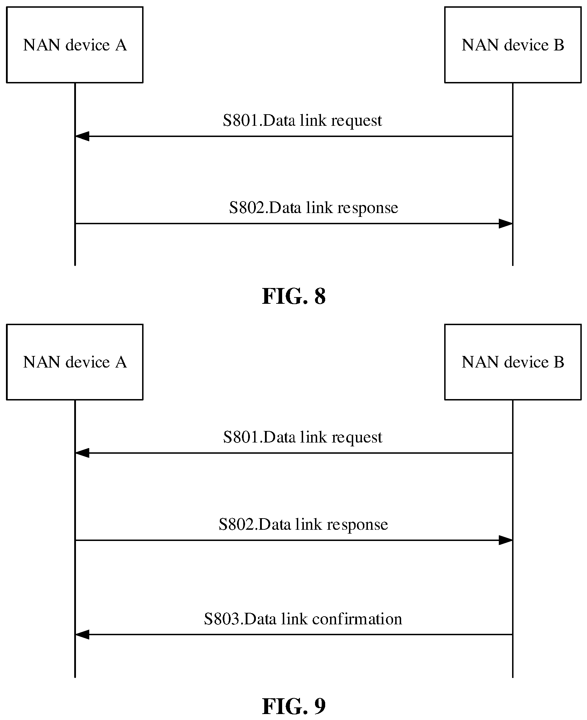

The NDP establishment process is also divided into two cases. The first case is the data path establishment that does not need confirmation as illustrated in FIG. 8, and the second case is the data path establishment that needs confirmation as illustrated in FIG. 9.

As illustrated in FIG. 8, the method includes steps S801 to S803.

At S801, the NDP requester sends a data path request frame to the NDP responder in the FAW or the DW.

After the service discovery, the NDP initiator sends a data path request frame to the NDP responder in the FAW or DW, and the data path request frame carries an NDL Schedule Initial Proposal, an NDP attribute, and an NDL attribute. The Type subfields of the NDL attribute and the NDP attribute are set to "Request", which indicates that the establishment of NDL and NDP is requested. In the NDL Schedule Initial Proposal:
1) one or more NAN availability attributes must be included, and the NAN availability attribute is used for indicating at least one FAW owned by the device itself;
2) one or more NDC attributes may be included, and the NDC attribute is associated with the corresponding NAN availability attribute through the Map ID field, such that the information of the NAN availability attribute, such as the frequency band, channel or the like, is obtained. If the flag of the selected NDC in the schedule control field of the NDC attribute is 1, it indicates that the initiator has selected an existing NDC, and the NDC CRB is indicated by the NDC attribute. If the flag of the selected NDC is 0, it indicates that the initiator wants to establish a new NDC, and the NDC CRB in the NDC attribute is only the suggestion of the initiator and can be negotiated;
3) others.

At S802, the NDP responder responds a data path response frame to the NDP request.

After receiving the above data path request frame, the NDP responder will respond a data path response frame to the NDP requester. The data path response frame carries the NDL attribute, the NDP attribute and the possible NDL Schedule Counter Proposal. The Type subfields in the NDL attribute and NDP attribute are set to Response, while the status subfield in the NDL attribute may be set to: Accept, Continue, or Reject.

If the status is set to Reject, it is required to set the error reason in the Reason Code subfield. At this case, the data path response frame may select to carry an NDL Schedule Suggest Proposal. The NDL Schedule Suggest Proposal includes:
1) one or more NAN availability attributes, the NAN availability attribute is used for indicating the FAW owned by the device itself;
2) one NDC attribute, suggested by the NDP responder as the FAW of the NDC CRB.

If the status is set to Accept, which corresponds to the data path establishment process that does not need confirmation, it is required to carry an NDL Schedule Compliant Proposal. The NDL Schedule Compliant Proposal includes:
1) one or more NAN availability attributes, the NAN availability attribute is used for indicating the FAW owned by the device itself;
2) one or more NDC attributes, which are the same as the FAW represented by the NDC attribute in the NDL Schedule Initial Proposal;
3) others.

If the status is set to Continue, which corresponds to the data path establishment process that needs confirmation, it is required to carry an NDL Schedule Counter Proposal. The NDL Schedule Counter Proposal includes:
1) one or more NAN availability attributes, the NAN availability attribute is used for indicating at least one FAW owned by the device itself;
2) one or more NDC attributes, these attributes indicate at least one FAW acceptable to the NDP responder as the NDC CRB;
3) others.

After the NDP requester receives the data path response frame carrying the NDL attribute with the Type subfield being Response:
if the status subfield is Accept, both sides complete the establishment of the data path, and both serving sides use the overlapped FAW during the negotiation process between itself and peer side as the NDL CRB, and the FAW indicated by the NDC attribute in the NDL Schedule Compliant Proposal becomes the NDC CRB.

If the status subfield is Reject, both sides terminates the data path establishment. If the NDL Schedule Suggest Proposal is received, the initiator will try to establish the data path again based on this.

If the status subfield is Continue, the NDP requester may choose to accept or reject the NDL Schedule Counter Proposal of the NDP responder. At this case, as illustrated in FIG. 9, the NDP requester performs S803 to send the data path confirmation frame with the Type subfield of the NDL attribute being Confirm to the responder.

In the data path confirmation frame with the Type subfield of the NDL attribute being Confirm, the status subfield is set to Accpet or Reject.
1) If the status is Accept, it indicates that the NDP requester accepts the NDL Schedule Counter Proposal of the NDP responder, it is required to carry the NDL Schedule Confirm Proposal, and herein the FAW indicated by the NDC attribute is same as that in the NDL Schedule Counter Proposal.
2) If the status is Reject, it indicates that the NDP requester has rejected the NDL Schedule Counter Proposal of the NDP responder.

After the NDP responder receives the data path confirmation frame with the Type subfield of the NDL attribute being Confirm, if the status subfield in the NDL attribute is Accept, both sides complete the establishment of the data path, and both serving sides use the FAW overlapped during the negotiation process between itself and peer sides as the NDL CRB, and the FAW indicated by the NDC attribute in the NDL Schedule Confirm Proposal becomes the NDC CRB. If the status subfield in the NDL attribute is Reject, both sides terminates the establishment of the data path.

### NAN scheduler

The NAN device is provided with a NAN scheduler, and the function of the NAN scheduler include:
1) recording the schedules of other surrounding NAN devices, including DW, FAW, etc.;
2) publishing the schedule of the NAN device itself; and
3) managing the resource for the establishment, update, and termination of NDL, NDP, and NDC.

One NAN device carries the Committed DWs information in the Device Capability attribute in the NAN management frame. One NAN device carries the information of the FAW in the NAN Availability attribute in the NAN management frame, and carries the schedules of NAN operation and non-NAN operation in the NDL attribute, NDC attribute, Ranging Setup attribute, and Public Availability attribute in the NAN management frame.

The NAN scheduler publishes these DWs, FAWs and other schedule information during the stages of cluster discovery, cluster synchronization, service discovery and data communication path establishment. After other NAN devices receive the NAN management frame with the schedule information, the scheduler will record these related schedule information.

During the negotiation stage of the data communication establishment, both sides of NAN devices select appropriate FAW as NDL and NDC CRB according to the schedule information of themselves and the peer STA.

In the related art, the WI-FI Aware technology does not prioritize the services, and all data frames of the services between two STAs share the NDC CRB of NDC without differentiation. Within the NDC CRB, the NAN device may send the data frame of any service according to the scheduling algorithm. This method is fair. However, it is not suitable for some specific types of services, such as low-latency service.

The NAN device sends the SDF during DW, and the frame carries its own FAW. If other device wants to communicate with the corresponding device, it may obtain the FAW of the peer STA from the received SDF, and negotiates the NDL and NDC schedule for the service with the peer STA in the corresponding FAW. The NDL CRB includes the overlapped FAWs of devices of both negotiating sides, while the NDC CRB is obtained by negotiating between devices of both sidesor by joining the existing NDC by both sides to obtain the corresponding NDC CRB.

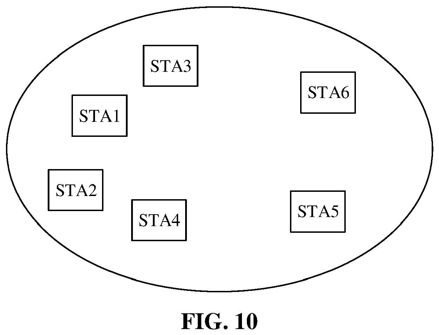

In an example, as illustrated in FIG. 10, STA3 and STA4 are neighbors of STA1 and STA2, respectively. That is, the communication of STA3 can interfere with communication of STA1 and the communication of STA4 can interfere with STA2. STA5 and STA6 are far away from STA1 and STA2, if STA1 and STA2 join NDC1, STA3 and STA4 can receive the NDC schedule of NDC1 transmitted by STA1 and STA2, and STA3 and STA4 need to refer to the NDC schedule of NDC1 when establishing a new NDC.

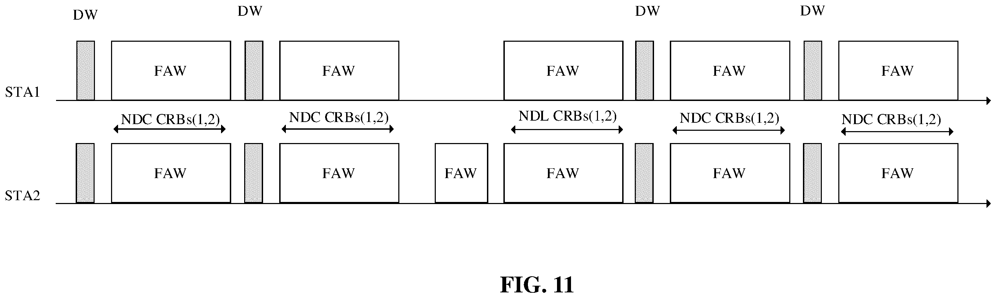

Assuming that two services are established successively between STA1 and STA2, one of the two services is a low-latency service and the other service is an ordinary service. The NDL and NDC CRB between STA1 and STA2 are illustrated in FIG. 11. In the NDC CRB, STA1 and STA2 may send the data frames of these two services, the two services are equal and share the same NDC CRB. However, this equal manner is not applicable to the special service such as low-latency. In FIG. 11, the NDC CRBs (1, 2) represents that the at least one CRB is used for NDC joined by the NDL between STA1 and STA2, and is NDC CRB, and the NDL CRBs (1, 2) represents that the at least one CRB is used for the NDL between STA1 and STA2, and is NDL CRB. In FIG. 11, FAW supported by STA2 and FAW not supported by STA1 are also included.

In order to facilitate the understanding of the technical solution of the embodiments of the present disclosure, the technical solution of the present disclosure will be described in detail below with reference to specific examples. As an optional solution, the above related technologies can be arbitrarily combined with the technical solutions of the embodiments of the present disclosure, and all of them belong to the scope of protection of the embodiments of the present disclosure. The embodiments of the present disclosure include at least some of the following contents.

The method for service scheduling provided by an embodiment of the present disclosure includes step S1201.

At S1201, the first NAN device determines at least one first CRB corresponding to a first service based on a service type and/or a first priority of the first service and a second priority of each of at least one CRB of a first NDC. The first service is scheduled within the at least one first CRB, and the first NAN belongs to the first NDC.

In an embodiment of the present disclosure, the first NAN device may be a publisher of the first service or a subscriber of the first service. The first NAN device provides the first service to the second NAN device or the first NAN device subscribes to the first service of the second NAN device.

The first NAN device belonging to the first NDC may be understood as the first NDC joining the first NDC. The NDL between the first NAN device and the second NAN device is a first NDL, and the first NDL is used for transmitting the first service. The first NAN device and the second NAN device join the first NDC, and the first NDL joins the first NDC. It is to be understood that the NAN devices in the first NDC may not include other NAN devices in addition to the first NAN device, or may include other NAN devices.

The first NAN device and the second NAN device establish a first NDP in the first NDL for the first service to transmit the first service through the first NDP. At this case, the first NAN device determines at least one first CRB for scheduling the first service based on a service type and/or a first priority of the first service and a second priority of each second CRB of the at least one CRB in the first NDC.

If the first NAN device is the publisher of the first service, it contends for the channel for the first service on at least one first CRB to transmit the first service on the contended channel. If the first NAN device is the subscriber of the first service, it contends for the channel for the first service on at least one first CRB to receive the first service based on the contended channel. It is to be understood that scheduling the first service may be understood as scheduling the data frame of the first service, and transmitting the first service may be understood as transmitting the data frame of the first service.

In an embodiment of the present disclosure, the first service identifies the first priority information based on the priority information, the first priority information is used for indicating the service type and/or the first priority, and the service type of the first service may indicate the first priority of the first service.

In an embodiment of the present disclosure, each CRB in the first NDC is identified with the second priority information, and the second priority information is used for indicating the second priority.

In an embodiment of the present disclosure, the first priority may be understood as the priority of the service, the second priority may be understood as the priority of the CRB or the FAW, and the division of the first priorities and the division of the second priorities may be same or different. In an example, the lowest first priority and the lowest second priority are priority 0, and the highest first priority and the highest second priority are priority 7. At this case, different levels of the first priorities correspond to different levels of the second priorities one-to-one. In an example, the lowest first priority and the lowest second priority are priority 0, the highest first priority is 3, and the highest second priority is priority 7. In an embodiment of the present disclosure, one first priority may have a corresponding second priority. However, the number of second priorities corresponding to one first priority is one or more, and the number of first priorities corresponding to one second priority is one or more.

It is to be understood that the service with higher first priority has higher latency requirement.

It is to be understood that the CRB with higher second priority corresponds to higher Access Category (AC).

In an embodiment of the present disclosure, when it is determined that one CRB cannot carry all the data frames of the first service, the transmission of the data frames of the first service may be implemented by one or more CRBs based on other CRBs of the remaining CRBs that are capable of carrying the first service.

In an embodiment of the present disclosure, the first NAN device determines the first CRB for scheduling the first service according to the service type and/or the first priority of the first service and the second priority of each of the CRBs of the first NDC, so that the NAN device determines the CRB for scheduling service based on the priority of the service and the priority of the CRB, thus the CRB may be selected for the current service according to the priority of the current service without blindly determining the CRB in the NDC schedule for scheduling service, thereby implementing that the resources are scheduled differentially according to the priority of the current service, and ensuring the differentiated scheduling of the service..

In an embodiment of the present disclosure, the first NAN device may determine a CRB corresponding to each of at least one service for the at least one service according to a priority of each of the CRBs of the first NDC. The first service is any one of the at least one service, and the first priorities of different services may be same or different.

In some embodiments, the step S1201 that the first NAN device determines the at least one first CRB corresponding to the first service based on the first priority of the first service and the second priority of each of at least one CRB includes following operation.

The first NAN device determines the at least one first CRB based on the type or the first priority of the first service and the second priority of each of the at least one CRB of the first NDC.

The CRB of the first NDC is located in the NDC in the first NDC schedule.

It is to be understood that the first NDL corresponds to an existing first NDL schedule, and the first NDC schedule is a subset of the first NDL schedule.

In some embodiments, the service type and/or the first priority is labeled based on at least one of:
first indication information for indicating the service type of the first service, herein different service types correspond to different first priorities; or
second indication information for indicating whether the first service is a low-latency service, herein the low-latency service has a highest first priority.

The first indication information indicates a service type of the first service, and the first NAN device may determine a first priority of the first service based on the indicated service type. The first indication information may also be referred to as service type information.

The second indication information indicates whether the first service is a low-latency service, and the second information may be referred to as a first low-latency identification, which is a low-latency flag corresponding to the first service. If the second indication information indicates that the first service is a low-latency service, the first service has the highest first priority. If the second indication information indicates that the first service is not a low-latency service, i.e., a non-low-latency service, the first service is not of the highest first priority, and at this case, the first priority of the first service may be determined by the first indication information.

In some embodiments, the second priority is labeled based on at least one of:
third indication information for indicating a second priority of a corresponding CRB; or
fourth indication information for indicating whether a corresponding CRB is used for a low-latency service, herein a CRB used for a low-latency has a highest second priority.

The third indication information of a CRB indicates the second priority of the CRB, and the third indication information may also be referred to as the priority information.

The fourth indication information of a CRB indicates whether the CRB is used for a low-latency service, and if the fourth indication information indicates that the CRB is used for a low-latency service, the CRB has the highest second priority. If the fourth indication information indicates that the corresponding CRB is not used for a low-latency service, that is, the corresponding CRB is used for the non-low-latency service, the CRB is not of the highest second priority, and at this case, the second priority of the CRB may be determined by the third indication information.

In some embodiments, a second priority corresponding to a first priority of at least one service scheduled within a CRB is higher than or equal to the second priority of the CRB.

For a CRB of the first NDC, the CRB is only allowed to schedule a service with a corresponding second priority higher than or equal to the second priority of the CRB, or is not allowed to schedule a service with a corresponding second priority lower than the second priority of the CRB.

For the at least one first CRB, the second priority of each first CRB is lower than or equal to the second priority corresponding to the first priority of the first service.

In an example, the first priorities correspond to the second priorities one-to-one from 0 to 7, and the CRB with the second priority being 6 is allowed to schedule the service with the first priority being 6 and the service with the first priority being 7.

In an example, the first priorities correspond to the second priorities one-to-one from 0 to 7, and the service with the second priority being 7 is allowed to be scheduled on the CRB with any one of the second priorities 0 to 7.

In an example, the first priorities include 0 to 4, and the second priorities include 0 to 7. The first priority corresponding to 0 corresponds to the second priority 0 and second priority 1, the first priority corresponding to 1 corresponds to the second priority 2 and second priority 3, the first priority corresponding to 2 corresponds to the second priority 4 and second priority 5, the first priority corresponding to 3 corresponds to the second priority 6 and second priority 7, and for a CRB with the second priority being 5, the first priorities being allowed to be scheduled are the first priority 2 and the first priority 3.

In an example, the first priorities include 0 to 4, and the second priorities include 0 to 7. The first priority corresponding to 0 corresponds to the second priority 0 and second priority 1, the first priority corresponding to 1 corresponds to the second priority 2 and second priority 3, the first priority corresponding to 2 corresponds to the second priority 4 and second priority 5, and the first priority corresponding to 3 corresponds to the second priority 6 and second priority 7, and the service with the first priority being 3 is allowed to be scheduled on a CRB with any one of the second priorities 0 to 7.

In some embodiments, when at least two services are scheduled within a CRB, the first priorities of different services of the at least two services are same or different.

One or more services may be scheduled within one CRB at the same time. In a case that two services are scheduled within one CRB, the first priorities of different services of the at least two services are same or different.

In some embodiments, when a first priority of a second service of the at least two services is higher than a first priority of a third service of the at least two services, a priority of an access category (AC) of the second service is higher than a priority of an AC of the third service.

In the case where at least two services are scheduled within one CRB, the higher the first priority of a service is, the higher the AC priority of that service is. It is to be understood that the higher the priority of the AC of a service is, the higher the priority of the Enhanced Distributed Channel Access (EDCA) parameter for channel access of that service.

In some embodiments, when a CRB is labeled for low latency service, only the low latency service is allowed to be scheduled within the CRB.

A CRB labeled for a low latency service is only allowed to schedule a low latency service. That is, the CRB is not allowed to schedule a non-low latency service.

In some embodiments, when the CRB is labeled for a non-low latency service, at least one service scheduled within the CRB includes a low latency service and/or a non-low latency service.

A CRB labeled for a non-low latency service may be allowed to schedule a low latency service, and may also be allowed to schedule a non-low latency service.

The low latency service is allowed to be scheduled within the CRB for low latency, and is also allowed to be scheduled within the CRB for non-low latency. The non-low latency service is only allowed to be scheduled within the CRB for the non-low latency. At this case, the first priority of the service may be determined based on the first indication information of the service and the second priority of the CRB is determined based on the third indication information of the CRB to determine whether the service can be scheduled within the CRB.

In some embodiments, when services scheduled within the CRB includes a low-latency service and a non-low-latency service, a priority of an AC of the low-latency service is higher than or equal to a priority of an AC of the non-low-latency service.

When at least two services are scheduled within one CRB for non-low latency, and the scheduled at least two services include a low latency service and a non-low latency service, the priority of the AC of the low latency service is higher.

In some embodiments, the first NAN device further performs the following processing.

The first NAN device determines the first NDC according to the service type and/or the first priority of the first service. The first NDC is an NDC to which a first NDL between the first NAN device and a second NAN device belongs, the first service is provided by the first NAN device to the second NAN device, or the first service is provided by the second NAN device to the first NAN device.

The first NAN device determines the first NDC and determines at least one CRB of the first NDC according to the service type and/or the first priority of the first service.

The first NAN device may directly select an existing first NDC based on the service type and/or the first priority of the first service, or may establish a new first NDC. In the case of directly selecting the existing first NDC, the first NDC is an already established NDC. In a case of establishing the new first NDC, the first NDC is the newly established NDC.

Before the first NAN device determines the first NDC, the following operation may be performed: the first NAN device sends first information and second information to the second NAN device; or the first NAN device receives the first information and the second information sent by the second NAN device. The first information is used for indicating the first service, and the second information is used for indicating the service type and/or the first priority of the first service.

If the first NAN device is the publisher of the service, the first NAN device sends the first information and the second information to the second NAN device to notify the second device of the first service that the first device can provide and the service type and/or the first priority of the first service.

If the first NAN device is the subscriber of the service, the first NAN device receives the first information and the second information sent by the second NAN device, to notify and determine the first service that the second device can provide and the service type and/or the first priority of the first service.

The first information and the second information may be carried in the same frame, and one piece of first information may correspond to one piece of second information.

In some embodiments, the first information and the second information are carried in a first frame, and the first frame is used for service discovery.

The first NAN device sends a first frame or receives a first frame sent by the second NAN device during a service discovery stage, and the first frame carries the first information and the second information.

When the first frame is used for the service discovery stage, the first frame is a service discovery frame (SDF).

If the first NAN device is the publisher of the service, the SDF is a published SDF. If the first NAN device is the subscriber of the service, the SDF is a subscribed SDF.

In an embodiment of the present disclosure, during the service discovery process, the first frame may be used for broadcasting one or more services. The first service may be any one of the services broadcast by the first frame. In a case that the first frame broadcasts a plurality of services, the first frame includes a plurality of pieces of first information, different pieces of first information indicate different services, and for each piece of first information, the first frame includes the second information corresponding to each piece of first information.

In some embodiments, the second information is located in a service descriptor attribute of the first frame.

In some embodiments, the second information is located in a service information field in the service descriptor attribute.

In an embodiment of the present disclosure, the service information field in the service description attribute of the SDF is modified such that, in a case where the service information field only includes the specific information of the service indicated by the service information subfield, the service information field further includes the first priority information that defines the first priority of the first service.

In some embodiments, the second priority includes at least one of the first indication information and the second indication information.

The first indication information is configured for indicating the service type of the first service, herein different service types correspond to different first priorities, and the first indication information is located in a first subfield of the service information field.

The second indication information is configured for indicating whether the first service is a low-latency service, herein the low-latency service has a highest first priority, and the second indication information is located in a second subfield of the service information field.

At this case, in addition to the service information subfield, the information service field may further include at least one of: a first subfield or a second subfield. The first field is used for indicating a service type of the first service. The first field may be referred to as a service type field. The second subfield is used for indicating whether the first service is a low-latency service. The second subfield may be referred to as a low-latency flag field. The information in the second subfield, i.e., the third indication information, may be referred to as a low-latency flag. The second subfield may include one or more bits. In a case that the second subfield is 1 bit, the low latency flag may also be referred to as a low latency flag bit.

In an embodiment of the present disclosure, the first NDC is an already established NDC or a newly established NDC.

The first NDL between the first NAN device and the second NAN device is used for the first NDC to perform the scheduling and transmission of the first service on the first NDP of the first NDL through the CRB of the first NDC.

If the first NDC is an already established NDC, the first NDL between the first NAN device and the second NAN device joins the first NDC in a case that the first NDL has joined the already established NDC or does not join NDC. The CRB(s) of the already established NDC is located in the first NDC schedule, then in a case that the first NAN device is the already established NDC, there is a CRB satisfying the service type/first priority of the first service in the first NDC schedule.

If the first NDC is a newly established NDC, the first NAN device and the second NAN device establish the NDC based on the service 1. The NDC can be completely newly established, that is, the NDC may be newly established on the basis of no existing NDC schedule, or a new NDC schedule may be established, on the basis of an already established NDC schedule, by modifying this NDC .

In a case where a new NDC schedule is established on the basis of the already established NDC schedule by modify this NDC, the already established NDC schedule may be used for the first NDL between the first NAN device and the second NAN device, or may be used for the second NDL between the first NAN device and the third NAN device.

In some embodiments, the case where the first NDC is an established NDC includes following case.

The CRB(s) of the already established NDC includes a second CRB, a second priority of the second CRB is lower than or equal to a first target priority, and the first target priority is a second priority corresponding to the first priority of the first service.

At least one CRB of the already established NDC includes a CRB whose second priority satisfies the scheduling of the first service. At this case, the first NAN device does not need to establish a new NDC, and uses the original NDC directly or joins the existing NDC.

In an example, if the first service is service 2, the first NAN device and the second NAN device establish an NDC based on service 1, and the CRB based on the NDC can perform the scheduling for service 1, there is no need to establish a new NDC, and service 1 and service 2 are transmitted in the same NDC.

In an example, when the first service is service 2, the first NAN device and the third NAN device establish an NDC based on service 1, and the CRB in the first NDC can be used for the scheduling for service 1, the first NDL joins the NDC established based on service 1. At this case, the second NAN device joins an existing NDC, i.e., the first NAN device, the second NAN device and the third NAN device join the same NDC.

In some embodiments, the case where the first NDC being a newly established NDC includes at least one of the following cases.

Case A, the first NAN device does not join an already established NDC.

Case B, the first NAN device has joined an already established NDC.

Case C, the first NAN device has joined an already established NDC, and the CRB(s) of the already established NDC includes a second CRB, herein a second priority of the second CRB is higher than or equal to a first target priority, and the first target priority is a second priority corresponding to the first priority of the first service.

Case D, the first NAN device has joined an already established NDC, and CRB(s) of the already established NDC does not include the second CRB.

Regarding case A, the first NAN device does not join the DNC, thus there is no NDC schedule. At this case, the new NDC schedule is established, that is, a first NDC including the first NAN device and the second NAN device is established.

Regarding case B, the first NAN device has joined the established NDC. At this case, this NDC may be an NDC joined by the first NDL or an NDC joined by the second NDL. The second NDL is an NDL between the first NAN device and the third NAN device. In a case that the first NAN device has already joined the NDC, the first NAN device establishes a new NDC directly. At this case, a new NDC schedule may be established based on the existing NDC schedule.

In an example, when the first NDL between the first NAN device and the second NAN device joins the already established NDC, and the first NAN device establishes a new NDC schedule (i.e., establishing the new NDC) based on the NDC schedule of the already established NDC, the first NDL between the first NAN device and the second NAN device joins the newly established NDC. At this case, the first NDL does not belong to the already established NDC.

In an example, when the second NDL between the first NAN device and the third NAN device joins the already established NDC, and the first NAN device establishes a new NDC schedule (i.e., establishing the new NDC) based on the NDC schedule of the already established NDC, the first NDL between the first NAN device and the second NAN device joins the newly established NDC.

Regarding case C, the first NAN device has joined the already established NDC. At this case, even if the NDC schedule of the already established NDC can satisfy the priority requirement of the first service, the first NAN device still establishes a new NDC schedule, and at this case, a new NDC schedule may be established based on the existing NDC schedule.

In an example, when the first NDL between the first NAN device and the second NAN device joins the already established NDC, the schedule of the already established NDC satisfies the priority requirement of the first service, but the first NAN device establishes a new NDC schedule (i.e., establishing the new NDC) based on the NDC schedule of the already established NDC, the first NDL between the first NAN device and the second NAN device joins the newly established NDC. At this case, the first NDL does not belong to the already established NDC.

In an example, when the second NDL between the first NAN device and the third NAN device joins the already established NDC, the schedule of the already established NDC satisfies the priority requirement of the first service, and the first NAN device establishes a new NDC schedule (i.e., establishing the new NDC) based on the NDC schedule of the established NDC, the first NDL between the first NAN device and the second NAN device joins the newly established NDC.

Regarding case D, the first NAN device has joined the already established NDC, but the NDC schedule of the already established NDC cannot satisfy the priority requirement of the first service, the first NAN device newly establishes a NDC schedule, and at this case, the new NDC schedule may be established based on the existing NDC schedule.

In an example, when the first NDL between the first NAN device and the second NAN device joins the already established NDC, the schedule of the already established NDC does not satisfy the priority requirement of the first service, and the first NAN device establishes a new NDC schedule (i.e., establishing the new NDC) based on the NDC schedule of the already established NDC, the first NDL between the first NAN device and the second NAN device joins the newly established NDC. At this case, the first NDL does not belong to the already established NDC.

In an example, when the second NDL between the first NAN device and the third NAN device joins the already established NDC, the schedule of the already established NDC does not satisfy the priority requirement of the first service, and the first NAN device establishes a new NDC schedule (i.e., establishing the new NDC) based on the NDC schedule of the established NDC, the first NDL between the first NAN device and the second NAN device joins the newly established NDC.

In some embodiments, the already established NDC is used for a first NDL or a second NDL. The second NDL is an NDL between the first NAN device and a third NAN device.

In some embodiments, when the first NDC is a newly established NDC, the first NAN device has joined a second NDC that has been established, and the second NDC is used for the second NDL, a newly added CRB of the first NDC with respect to the second NDC partially overlaps or does not overlap with a CRB of the second NDC in time domain and/or frequency domain.

In an example, the CRBs of the second NDC include CRB1, and the priority of CRB1 is 4. For the first service, the first NAN device adds CRB2 on the basis of CRB1 to obtain the CRBs of the first NDC: CRB1 and CRB2. CRB2 and CRB1 partially overlap or do not overlap in the time domain and/or the frequency domain.

In some embodiments, when the third CRB of the second NDC added with respect to the first NDC and a fourth CRB of the first NDC partially overlap in time domain and/or frequency domain, a second priority of the fourth CRB is higher than or equal to a second priority of the third CRB.

In some embodiments, when a priority of the fourth CRB is same as a priority of the third CRB, a priority of an AC of at least one service scheduled within the fourth CRB is higher than a priority of an AC of at least one service scheduled within the third CRB at an overlapped part of the third CRB and the fourth CRB.

In some embodiments, the first NAN device further performs the following processing.

The first NAN device receives a second frame sent by the second NAN device, or the first NAN device sends a second frame to the second NAN device. The second frame is used for establishing a first NDP in the first NDL, and the first NDP is used for transmitting the first service.

In the embodiment of the present disclosure, the second frame includes a link establishment request frame and a link establishment response frame.

If the first NAN device is the NDP requester and the second NAN device is the NDP responder, the first NAN device sends the link establishment request frame to the second NAN device and receives the NAN link establishment response frame sent by the second NAN device.

If the first NAN device is the NDP responder and the second NAN device is the NDP requester, the first NAN device receives the link establishment request frame sent by the second NAN device and sends a NAN link establishment response frame to the second NAN device.

In some embodiments, when the first NDC is a newly established NDC, the second frame carries the third information and the fourth information. The third information is used for indicating a first further availability window (FAW) and the fourth information is used for indicating a second priority of the first FAW, the second priority of the first FAW is a first target priority, and the first target priority is a second priority corresponding to the first priority of the first service.

The first FAW includes the following cases:
the FAW of the first NAN device itself;
the FAW of the second NAN device itself;
the FAW determined by the first NAN device;
the FAW determined by the second NAN device;
the second priority indicated by the second information corresponding to the first FAW is the second priority set by the NDP requester.

The first NAN device and the second NAN device may use the first FAW as the CRB of the first NDC based on the second priority of the first FAW and the first priority of the first service.

It is to be understood that the second frame may further carry at least one other FAW, and the second priority of the other FAW is higher than the second priority corresponding to the first priority of the first service.

The fourth information is carried in an NDC attribute of the second frame.

The NDC attribute may include the following fields: attribute ID: indicating that the attribute is NDC attribute; length: indicating the length of the NDC attribute;

NAN Data Cluster ID: unique identification of the NDC; attribute control: indicating whether the NDC indicated by the NDC attribute already exists; and schedule entry list: including a plurality of schedule entry subfields, each schedule entry is one or more NDC FAWs or CRBs of same period.

In some embodiments, the fourth information is carried in a schedule entry field in a schedule entry list of the NDC attribute.

In some embodiments, the fourth priority includes at least one of:
fifth indication information for indicating the priority of the first FAW, herein the first indication information is located in a first subfield of the schedule entry field; or
sixth indication information for indicating whether the first FAW is used for a low-latency service, herein a first FAW used for the low-latency service has the highest priority, and the second indication information is located in a second subfield of the schedule entry field.

The schedule entry field may include a first subfield, a second subfield, and a reserved subfield.

The first subfield of the schedule entry field includes the fifth indication information for indicating the priority of the first FAW, and the first subfield of the schedule entry field may also be referred to as a priority subfield.

The second subfield of the schedule entry field includes the sixth indication information (i.e., the low latency flag) for indicating whether the first FAW is used for a low latency service, and the second subfield of the schedule entry field may also be referred to as a low latency subfield.

In some embodiments, when the first NDC is an already established NDC and is used for the first NDL, the second frame does not carry CRB(s) of the already established NDC; or
when the first NDC is an already established NDC and is used for a second NDL, the second frame carries the CRB(s) of the already established NDC, and the second NDL is an NDL between the first NAN device and a third NAN device.

In a case that the first NDC is an already established NDC and the already established NDC is used for the first NDL, the second frame between the first NAN device and the second NAN device for establishing the NDP does not need to carry the CRB(s) of the already established NDC. At this case, the second frame between the first NAN device and the second NAN device is only used for establishing the first NDP, i.e., determining that the communication is needed, and the NDC attribute is not needed to be carried.

In a case that the first NDC is an already established NDC and the already established NDC is used for the second NDL, the second frame between the first NAN device and the second NAN device for establishing the NDP carries the CRB(s) of the already established NDC.

In an embodiment of the present disclosure, there are now three devices in the NAN cluster, i.e., STA1, STA2 and STA3. STA1 has two services: service 4 and service 6, and the priorities of the services are 4 and 6, respectively.

As the publisher, STA1 has two options.

Option 1, service 4 is published firstly, and then service 6 is published after some DWs.

Option 2, the services 4 and 6 are published at one time.

For Option 1, STA2 and STA1 subscribe to service 4 through the service discovery stage, and perform the data path establishment stage through the two-way handshake. During the data path stage, the NDL Schedule Initial Proposal sent by STA1 to STA2 includes an NAN availability attribute and an NDC attribute. The NAN availability attribute is the FAW available by itself, and the NDC attribute is the proposal of STA2 to the NDC schedule. At this case, the schedule information in the NDC attribute is as follows: Map ID 2, Channel, Bit Duration 16 TUs, Priority 4, Low Latency ID being 0, Time Bitmap: 11100.

The NAN availability attribute in the NDL Schedule Compliant Proposal responded by STA1 is also its own FAW. Based on the 2-way handshake, the schedule in the NDC attribute is the same as above.

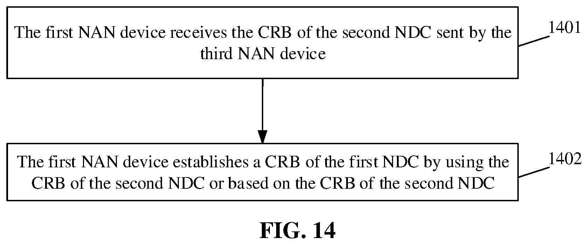

This is the first establishment between STA1 and STA2, thus the NDL schedule and the NDC schedule as illustrated in FIG. 14A are established simultaneously.

Then, the service 6 is published/subscribed between STA1 and STA2. At this case, it is to be noted that the already established NDC schedule has no FAW with priority 6. At this case, there are two cases.

Case 1: an existing NDC schedule may be selected. Although the current schedule does not have a FAW with priority 6, the data frame of the service with priority 6 may be transmitted on the FAW with priority 4.

Case 2: a new NDC schedule may be established.

For Case 1, the path establishment request or path establishment response during the data path establishment stage does not carry the NDC attribute, and the process at this case is only for both sides to determine that there is a service 6 that needs to communicate (i.e., establishing an NDP).

Regarding Case 2, the path establishment request or path establishment response during the data path establishment phase carries an NDC attribute, and the NDL schedule information in the NDC attribute includes: Map IDs 2 and 2, channel, bit durations 16 TUs and 16TU, priorities 6 and 4, low latency ID of 0 and 0, and time bitmaps: 0000000000111 and 11100000000000.

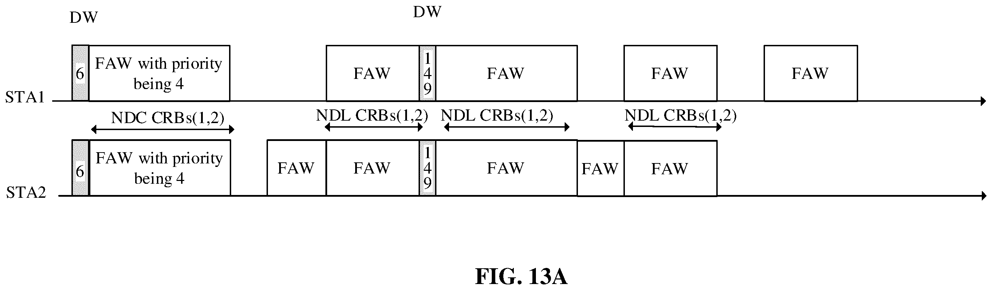

After the negotiation is completed, the NDC schedule between the STA 1 and the STA 2 negotiated based on the above NDL schedule information is illustrated in FIG. 14B. The NDC schedule illustrated in FIG. 14B is not the same as the original NDC schedule illustrated in FIG. 13A. The original NDC schedule illustrated in FIG. 13A may still exist, and may be in use by other devices.

At this case, if the device 3 needs to subscribe to the service 4 or the service 6 or the both simultaneously, since the data path is established between the STA1 and the STA3 for the first time, it is needed to establish the NDL and the NDC schedule simultaneously. During the establishment process, if the NDL CRB between the STA1 of the STA3 satisfies the NDC schedule between the STA1 and the STA2, the selection may be performed directly. In the case of selecting directly, the NDL schedule information carried in the NDC attribute includes: Map IDs 2 and 2, channel, bit durations 16 TUs and 16 TUs, priorities 6 and 4, low latency IDs being 0 and 0, time bitmaps: 0000000000111 and 11100000000000.

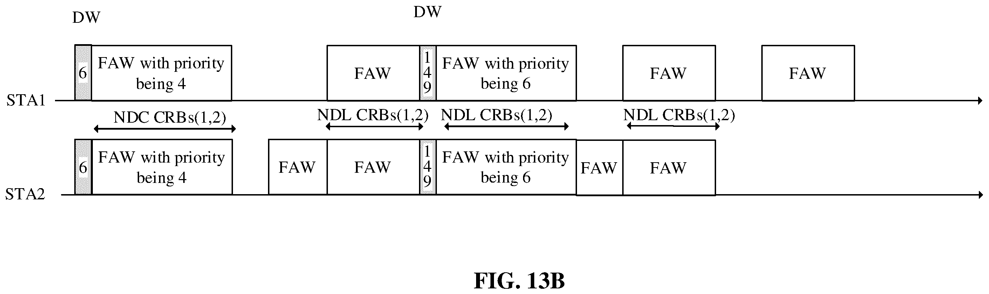

If the NDC schedule illustrated in FIG. 13B does not satisfy the requirement of service between STA1 of STA3, a new NDC schedule needs to be established. If a new NDC schedule needs to be established, it is necessary to refer to the NDC schedule between STA1 and STA2, and the time domain and frequency domain should be staggered as much as possible.

Regarding Case 2, during the first NDP establishment stage, the NDC attribute information carried by the path establishment request or the path establishment response may contain both the CRB with priority of 4 and the CRB with the priority of 6. The generated NDC schedule and NDL schedule are illustrated in FIG. 14B.

At this case, if the device 3 needs to subscribe to the service 4 or the service 6 or both simultaneously, since the data path is established between the STA1 and the STA3 for the first time, it is necessary to establish both the NDL schedule and the NDC schedule simultaneously. During the establishment process, if the NDL CRB between the STA1 of the STA2 satisfies the NDC schedule between the STA1 and the STA3, the selection may be performed directly, and a new NDC schedule is needed to be established if it does not satisfy. If a new NDC schedule needs to be established, it is needed to refer to the NDC schedule between STA1 and STA2, and the time domain and frequency domain should be staggered as much as possible.

Assuming that STA1 and STA2 have established the NDC schedule, and STA1 publishes service 6 and STA2 subscribes to service 6, there is actually a special case in addition to the above two cases for the NDC schedule between the two devices, that is, the current NDL CRB cannot satisfy the new NDC schedule, and then the NDL schedule needs to be updated at this case, and a new NDC schedule will be established at the same time during the updating process. This new NDC schedule must satisfy the previous service 4 and the current service 6.

The updating process of the NDL schedule is completely consistent with the establishment process of NDL and NDC.

In some embodiments, if the already established NDC is used for the second NDL, the method further includes following operation.

The first NAN device receives a CRB of a second NDC sent by the third NAN device, and the second NDC is an already established NDC for the second NDL.

As illustrated in FIG. 14, the method includes steps S1401 to S1402.

At S1401, the first NAN device receives the CRB of the second NDC sent by the third NAN device.

At S1402, the first NAN device establishes a CRB of the first NDC by using the CRB of the second NDC or based on the CRB of the second NDC.

In some embodiments, the operation that the first NAN device receives the CRB of the second NDC sent by the third NAN device includes following operation.

The first NAN device receives a third frame sent by the third NAN device, herein the third frame carries the CRB of the second NDC, and the third frame belongs to a broadcast frame.

After obtaining the CRB of the second NDC, the third NAN device broadcasts the third frame and carries the CRB of the second NDC in the third frame, so that the NAN devices around the third NAN device, including the second NAN device, receive the NDC schedule of the third NAN device.

In some embodiments, the third frame further carries fifth information, the fifth information is used for indicating whether the CRB of the second NDC carried by the third frame is broadcast instead by an NAN control device or a NAN non-control device in a synchronous state.

The NAN control device may be understood as the master, the NAN non-control device in the synchronous state may be understood as the non-master in the synchronous state.

The master and non-master may synchronize the NDC schedule to other NAN devices through the synchronization beacon frame.

If the fifth information is used for indicating that the CRB of the second NDC carried by the third frame is broadcast instead by the NAN control device or the NAN non-control device in a synchronous state, in the case that the first NAN device is the master or the non-master, the received CRB of the second NDC is broadcast.

If the fifth information is used for indicating that the CRB of the second NDC carried by the third frame is not broadcast instead by the NAN control device or the NAN non-control device in the synchronous state, in the case that the first NAN device is the master or the non-master, the CRB of the second NDC to be received is not broadcast.

In an embodiment of the present disclosure, based on the different values of the fifth information, different values may be used for indicating that the CRB of the second NDC is broadcast instead by the NAN control device or by the NAN non-control device in the synchronous state, or the CRB of the second NDC is not broadcast instead by the NAN control device or the NAN non-control device in the synchronous state, respectively.

In an example, if the value of the fifth information is 0, it indicates that the CRB of the second NDC is broadcast instead by the NAN control device or the NAN non-control device in the synchronous state. If the value of the fifth information is 1, it indicates that the CRB of the second NDC is not broadcast instead by the NAN control device or the NAN non-control device in the synchronous state.

When the first NAN device is an NAN control device or an NAN non-control device in a synchronous state, and the fifth information indicates that the CRB of the second NDC carried by the third frame is broadcast instead by an NAN control device or an NAN non-control device in a synchronous state, the method further includes following operation.

The first NAN device sends a fourth frame, herein the fourth frame carries the CRB of the second NDC, and the fourth frame belongs to a broadcast frame.

When the first NAN device is the master or the non-master, the CRB of the second NDC may be broadcast through the fourth frame.

In some embodiments, the fifth information is located in a first field of an NDC attribute in the third frame.

In some embodiments, the method further includes following operation.

When the first NAN device does not receive the CRB of the second NDC for a first number of consecutive discovery windows (DW), the first NAN device deletes the CRB of the second NDC from local.

The first NAN device includes a NAN scheduler therein. If the NAN scheduler does not receive the CRB of the second NDC in the first number of consecutive DWs, it is considered that the second NDC applied by the CRB of the second NDC has been released, and the CRB of the second NDC is deleted from the local.

The value of the first number may be set according to actual needs, such as 5, 8, 10, etc.

In some embodiments, the first NAN device broadcasts a CRB of the first NDC.

After determining the CRB of the first NDC, the first NAN device may broadcast the CRB of the first NDC, such that the NAN devices adjacent to the first NAN device receive the CRB of the first NDC, know which CRBs have been used for the transmission of the service and the priority of each of these CRBs, thereby establishing the NDC based on the known CRBs and priorities of the CRBs.

In some embodiments, the operation that the first NAN device broadcasts the CRB of the first NDC includes following operation.

The first NAN device sends a fifth frame, herein the fifth frame carries the CRB of the first NDC, and the fifth frame belongs to a broadcast frame.

In some embodiments, the fifth frame further carries sixth information, and the sixth information is used for indicating whether the CRB schedule of the first NDC carried by the fifth frame is broadcast instead by an NAN control device or a NAN non-control device in a synchronous state.

The fifth information and the sixth information are information having the same function and located in different frames. The fifth information is located in the third frame and the sixth information is located in the fifth frame.

If the first NAN device does not require that the CRB of the first NDC is broadcast instead by the NAN control device or by the NAN non-control device in the synchronous state, the sixth information may be set to indicate that the CRB of the first NDC is not broadcast instead by the NAN control device or the NAN non-control device in the synchronous state. If the first NAN device wants the CRB of the first NDC to be broadcast instead by the NAN control device or the NAN non-control device in the synchronous state, the sixth information may be set to indicate that the CRB of the first NDC is broadcast instead by the NAN control device or the NAN non-control device in the synchronous state.

In some embodiments, the sixth information is located in a first field of an NDC attribute in the fifth frame.

In some embodiments, the first field is a reserved field.

The information indicating whether the CRB of the NDC is broadcast instead by the NAN master or the NAN non-master in the synchronous state is carried in the reserved field of the DC attribute.

In some embodiments, the broadcast frame includes at least one of: Service Discovery Frame (SDF), a proximity aware network action frame (NAF), and synchronization beacon frame.

The application scenarios of SDF, NAF, and synchronization beacon frames are different.

For the SDF, it is broadcast by the service publisher at the beginning of the DW.

For the NAF, it is broadcast by the service publisher or the service subscriber at any time, at this case, the restriction of broadcasting within the DW is lifted.

For the synchronization beacon frame, it is broadcast by the master or the non-master in the synchronous state.

The first NAN device may broadcast the CRB of the first NDC by broadcasting the broadcast frame once or at least twice according to the scenario.

Assuming that there is an NDC schedule between STA1 and STA2, and the surrounding devices are shown in FIG. 14C.

In the DW, STA1 and STA2 will broadcast the NDC schedule, and STA3 may receive such a broadcast frame, thus STA3 will know that there is an NDC schedule around, and the scheduler of STA3 will record this NDC schedule.

At a certain time, the service communication between STA1 and STA2 ends (assuming there is only one service), then both of them will exit from the NDC (may or may not exit, assuming exit here), that is, STA1 and STA2 will no longer execute the NDC schedule, so STA1 and STA2 will no longer broadcast the NDC schedule in the following DWs. Therefore, the STA 3 will not receive the information of the original NDC schedule in a plurality of consecutive DWs, and the STA 3 will consider that the original NDC schedule has been deleted, so the STA 3 scheduler will also delete the original NDC schedule record.

STA3 accepts the broadcast frames from surrounding devices. If there is NDC schedule information in the broadcast frame, STA3 records it. If STA3 does not receive the recorded NDC schedule information in a plurality of consecutive DWs, STA3 considers that the recorded NDC schedule does not exist, and deletes the corresponding NDC schedule from its own record.

If there are two services between STA1 and STA2 (assuming that the priorities are 4 and 6), and one of the services (assuming it is service 4) ends the communication at a certain time, the NDC schedule should still include the CRB with priority of 4 and the CRB with priority of 6 at this case. However, at this case, there is only one service (service 6) between STA1 and STA2.

Hereinafter, the method for service scheduling provided by the embodiments of the present disclosure will be further described by taking an example that the priorities of the services and the priorities of the CRBs are divided identically and are divided into eight levels respectively.

An embodiment of the present disclosure proposes a method for labeling and classifying NDC CRB, such that the WI-FI Aware can better support different types of services or operations. Certain FAWs in the NDC are labeled. As illustrated in FIG. 10, assuming that the CRBs of the NDC joined by the NDL between STA1 and STA2 (NDC CRB (1, 2)) are labeled as priority 7 and priority 4.

The data frame of the low-latency service between STA1 and STA2 may be sent in the CRB for low latency or in the CRB for non-low latency with priority 4, while the data frame of the service with priority 4 is only allowed to be sent in the CRB with priority 4.

The publisher and subscriber of the service are required to actively broadcast the labeling cases of the FAW or CRB through the SDF or NAF within the DW.

If STA3 and STA4 receive the priority of each of the NDC CRBs broadcast by STA1 and STA2, respectively, so as to serve as a reference during the subsequent establishment of a new NDC. The services with the same or higher priority may use same CRB(s), or may select other CRB(s) according to their own resource. The service with low priority should avoid the labeled CRB.

STA5 and STA6 cannot receive the broadcast from STA1 and STA2, thus these two STAs do not need to avoid the CRB(s) labeled by STA1 and STA2 when establishing NDC.

In an embodiment of the present disclosure, the NAN device divides the NDC CRBs into different priorities according to different types of the supported services (i.e., different service types). The data frames of different types of services are preferentially scheduled in the FAWs or CRBs with the pre-specified corresponding priorities, and the data frame of the service with high priority may also be scheduled in a FAW or CRB with low priority.

A Service Type field is added to the service description attribute, and the NAN device transmits a service discovery frame carrying the service description attribute during the service discovery stage. The service category may also be broadcast while the service owned by the device is broadcast, so that the NAN device may obtain the service and the service category of other surrounding NAN devices.

The NDC attribute is modified by adding a Priority field and a low latency flag bit to the NDC attribute. On one hand, when the service publisher and the service subscriber negotiate the NDL CRB and the NDC CRB during the process of establishing the data path, the service publisher and the service subscriber may label part of the negotiated NDC CRBs as the FAWs or CRBs with the same priority or as the FAWs or CRBs for the low-latency service, according to the category of the service and whether the service is a low-latency service. The establishment stage of the NDP is divided into the following two cases.

Case 1: there has already been an NDC schedule between the NAN device pair. If the NDC schedule contains the FAW or CRB whose priority is same as or lower than the priority of the service, the device may directly select the existing NDC schedule. If the NDC schedule does not contain a FAW or CRB whose priority is same as or lower than the priority of the service, the NAN device pair establishes a new NDC. When establishing a new NDC , if the current NDL CRB cannot satisfy the new NDC requirement, an NDL scheduling update program is started to update the NDL CRB and the NDC CRB on the basis of satisfying the existing service to satisfy the new NDC. The NDL scheduling update program is the same as the NDP establishment program.

Case 2: there is no NDC schedule for the NAN device pair, and the NAN device pair is required to negotiate the FAW or the CRB of the NDL and NDC, label the FAW or the CRB, and divide the priority of the FAW or the CRB, according to the category of the service.

After the data path establishment is completed, both NAN devices may prioritize the scheduling and transmission of the data frame of the service with the same priority or higher priority in the FAW or CRB with the specified priority.

In the scenario of distinguishing the low-latency service, the FAW or CRB used for the low-latency service prioritizes the transmission of the data frame of the low-latency service, within the FAW or CRB for the non-low-latency service, the data frame for non-low-latency service is scheduled and transmitted, and the data frame for low-latency service may also be transmitted in non-low-latency FAW or CRB. In this case, the data frame for low-latency service use high-priority access manner, such as using the queuing queue and EDCA parameters of priority 7, while the low-priority access manner is used for non-low-latency service.

In the scenario in which the services with different priorities are distinguished, in a segment of FAW or CRB, the data frame of the service whose priority is not lower than the priority of the FAW or CRB is allowed to be scheduled, and in this case, the data frame of the service with high priority use a high priority access manner, such as using the queuing queue and EDCA parameter with high priority, while the data frame of the service with low priority uses a low priority access manner, such as using the queuing queue and EDCA parameter with low priority.

On the other hand, after the data path is established, the publisher of the service and the subscriber of the service need to broadcast the negotiated NDC schedule of FAW or CRB including the priority through the service discovery frame or the NAN action frame (NAF) in the following DW, and the master or non-master sync device may be used to broadcast instead. The notification flag field is added in the attribute control field of the NDC attribute. When sending the frame of the NDC schedule information of FAW or CRB including the priority, the publisher and the subscriber of the service may set the notification flag in the attribute control field of the NDC attribute to 0, which indicates that it is required the master or the non-master sync device to broadcast the NDC schedule information instead. After the master or non-master sync device receives this frame, the scheduler records the NDC schedule information and broadcasts the NDC schedule information in the following DW. Herein the notification flag in the attribute control field of the NDC attribute is set to 1, which indicates that the NDC schedule information in the frame is not intended to be broadcast by the master or non-master sync.

After other device receives the NDC schedule of FAW or CRB including the priority, the scheduler will record this NDC schedule of FAW or CRB including the priority. In the following time, if other device wants to establish or join NDC, it needs to refer to the information in the existing NDC schedule. There are two specific cases.

Case 1: Scenario of distinguishing low-latency service and non-low-latency service.
a) For the FAW or CRB for the low-latency service in the NDC schedule, regardless of whether the service requested by the device itself belongs to the low-latency service, priority should be given to ensuring that the FAW or CRB negotiated under the condition of satisfying the service requirement is staggered with the FAW or CRB used for low-latency service in the existing NDC schedule in the time domain or frequency domain.
b) If the service requested by the device itself is a low-latency service, priority should be given to ensuring that the FAW or CRB negotiated under the condition of satisfying the service requirement is staggered in the time domain or frequency domain with the existing FAW or CRB in the existing NDC schedule.
c) The FAW or CRB for the low-delay service in the NDC schedule may overlap with the FAW or CRB for the non-low-delay service in the time domain or the frequency domain, and in the overlapped FAW or CRB, the access of the low-delay service is prioritized to be ensured. For example, the low-delay service uses an EDCA parameter with the priority of 7 to perform the channel contention, and the non-low-delay service uses an EDCA parameter with the lower priority to perform the channel contention.

Case 2: Scenario of distinguishing the priorities of services, and there are following three cases according to different priorities of the services.
a) The priority of the service is higher than the priority of the FAW or CRB included in the NDC schedule, and the device may optionally establish a new NDC according to its own resources, i.e., establishing a new NDC schedule, and the new NDC schedule contains the FAW or CRB whose priority is same as or lower than the priority of the service. The new NDC schedule may include the FAW or CRB for the low-priority service which is included in the original NDC schedule, and the data frame of the high-priority service is prioritized to be transmitted within the high-priority FAW or CRB, or may be transmitted within the low-priority FAW or CRB, in this case, the data frame of the high-priority service uses the high-priority access manner, and the data frame of the low-priority service uses the low-priority access manner. The device may optionally directly join the current NDC according to its own resources and use the current NDC schedule.
b) The priority of the service is equal to the priority of the FAW or CRB included in the NDC schedule. The device may choose to establish a new NDC, i.e., establishing a new NDC schedule. Similar to the previous case, the new NDC schedule may label a new segment of FAW or CRB, or may select the FAW or CRB included in the original NDC schedule, i.e., joining directly the current NDC and using the current NDC schedule.
c) The priority of the service is lower than the priority of the FAW or CRB included in the NDC schedule, and the device must establish a new NDC. The FAW or CRB included in the NDC schedule of the new NDC needs to avoid the FAW or CRB for the high priority service in the original NDC schedule.

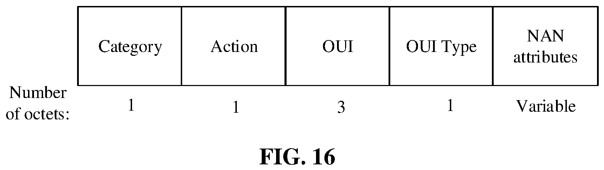

In the WI-FI Aware standard, the service is published and subscribed to through SDF. Therefore, SDF also includes the description of service information. The SDF format, as illustrated in FIG. 16, includes the following fields: one octet of category field, one octet of action field, three octets of Organizationally Unique Identifier (OUI) field, one octet of OUI type field, and a variable octet of NAN attributes field.

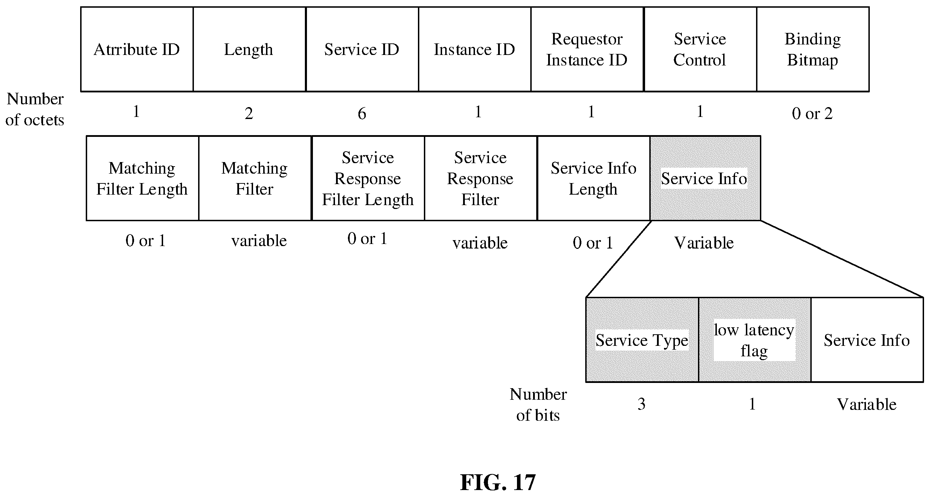

The service descriptor attribute in the NAN attribute carries information of the service. The format of the service descriptor attribute is illustrated in FIG. 17 and includes the following fields:
Attribute ID: the value is fixed to 0x03, which is used for determining the type of NAN attribute;
Length: the length of the service description attribute;
Service ID: the value is the hash value of the service name;
Instance ID: the value is Publish_ID or Subscribe_ID, depending on the role of the device sending the frame;
Requestor Instance ID: the instance ID in the frame that triggers the frame;
Service Control: some information that defines the service control bitmap;
Binding Bitmap: used for indicating the post discovery connection attribute bound to the service description attribute;
Match Filter Length: indicating whether a match filter field exists;
Match Filter: some filter conditions for service discovery;
Service Response Filter Length: indicating whether the service response filter field exists;
Service Response Filter: enabling a potential responder to determine whether it should respond to the NAN SDF, this field will be further considered only if the responder satisfies the service ID and match filter condition;
Service Information (Info) Length: indicating whether the service information field exists;
Service Info: including specific information of the service and is specified by the upper service.

In the embodiment of the present disclosure, as illustrated in FIG. 17, the first three bits of the Service Info serve as a Service Type subfield and is used for indicating the type or priority of the service represented by the service description attribute. The fourth bit serves as a Low latency flag bit for indicating whether the service is a low latency type service.

The service types or priorities correspond to eight Users Priorities (UPs) in EDCA one-to-one, and the queuing queue of the data frame of the service and the parameter used when accessing the channel are determined according to the type or priority of the service.

The service priorities corresponding to the values of the Service Type subfield are shown in Table 1:

**Table 1 Example of Service Type subfield**

| Service Type | AC |
|---|---|
| 1 | AC_BK (Background) |
| 2 | AC_BK |
| 0 | AC_BE (Best Effort) |
| 3 | AC_BE |
| 4 | AC_VI (Video) |
| 5 | AC_VI |
| 6 | AC_VO (Voice) |
| 7 | AC_VO |

Herein the priorities of service type 0 to service type 7 are sequentially increased, the priority of service type 0 is the lowest, and the priority of service type 7 is the highest.

For the low latency flag bit, if the value of the low latency flag bit is 1, it indicates that the service is a low latency service, and the value of the service type subfield needs to be set to 7. When the data frame of the low latency service is transmitted in the FAW or CRB for non-low latency, the highest priority EDCA parameter is used. The setting of the Low latency flag bit may be shown in Table 2.

**Table 2 Example of the Low latency flag bit setting**

| Low latency flag bit value | Function |
|---|---|
| 1 | Representing a low latency service, the value of the service type field is set to 7. |
| 0 | Representing a non-low latency service, the priority is determined by the value of the Service Type field. |

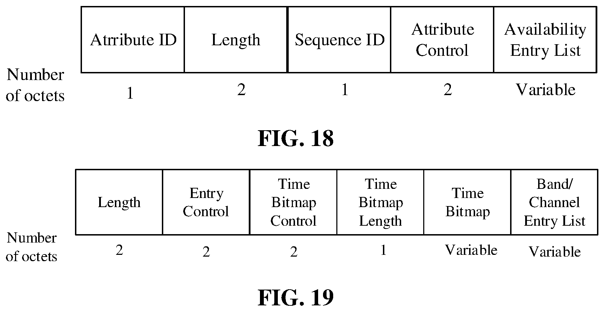

The format of the NAN availability attribute in WI-FI Aware is illustrated in Figure 18 and includes the following fields:
Attribute ID: indicating the type of the attribute;
Length: indicating the length of the NAN availability attribute;
Sequence ID: indicating the order in which the availability scheduling information is broadcast, and the larger value indicates that the availability scheduling information is newer;
Attribute Control: some control information indicating the FAW represented in the NAN availability attribute, such as an indication of whether the availability scheduling information of the NAN device has changed;
Availability Entry List: including a plurality of availability entries, each entry represents one or a series of periodic FAWs.

The Availability Entry List field includes one or more availability entries, and each availability entry subfield format is illustrated in FIG. 19, and includes:
Length: indicating the length of the availability entry subfield;
Entry Control: some control information indicating the availability entry, such as the type of the availability entry, etc.;
Time Bitmap Control: some control information indicating the time bitmap, such as the length of each bit;
Time Bitmap Length: indicating the length of the time bitmap field;
Time Bitmap: time information indicating the availability entry;
Band/Channel Entry List: indicating the band and channel supported by the availability entry.

Each availability entry represents one or some FAWs with the same period, and the NAN device indicates the owned FAW by carrying the NAN availability attribute in the SDF, beacon frame, or NAF.

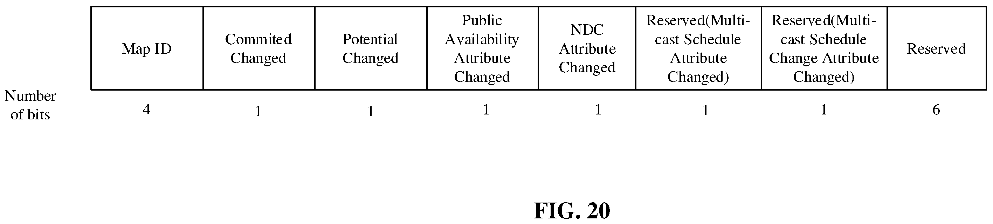

One or more NAN availability attributes may be carried in one frame. The function of the Map ID subfield existing in the attribute control field is to distinguish different NAN availability attributes. The format of the attribute control field is illustrated in Figure 20, and includes:
Map ID: unique identification of the NAN availability attribute; and
Fields indicating whether information such as committed FAW, potential FAW, public availability attribute, NDC attribute, etc. has changed, respectively.

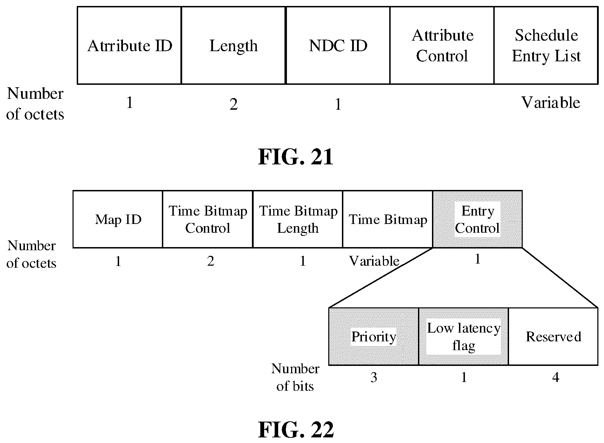

NDC attribute may also be carried in the SDF, the beacon frame, or the NAF. The format of the NDC attribute is illustrated in FIG. 21, and includes the following fields:
Attribute ID: indicating that the attribute is the NDC attribute;
Length: the length of the NDC attribute;
NDC ID: unique identification of the NDC;
Attribute Control: indicating whether the NDC indicated by the NDC attribute already exists;
Schedule Entry List: including a plurality of schedule entry subfields, each schedule entry is one or more NDC FAWs or CRBs with same period.

The schedule entry list field contains one or more schedule entries, and each schedule entry subfield format is illustrated in FIG. 22, and includes:
Map ID: when the map **ID** in the subfield is the same as the map **ID** in the attribute control in the NAN availability attribute, it indicates that the schedule entry is associated with the NAN availability attribute;
Time Bitmap Control: indicating some control information of the time bitmap;
Time Bitmap Length: indicating the length information of the time bitmap;
Time Bitmap: indicating the time information of schedule entry;
Entry Control: indicating the category of the schedule entry.

Each schedule entry is one or some FAWs with the same period in the NDC CRBs, and the schedule entry only indicates the time bitmap of the FAW and does not indicate the information such as the channel and band. By setting the value of the Map **ID** and the value of the Map **ID** in the Attribute Control field in the NAN availability attribute to one value, the schedule entry is associated with the corresponding NAN availability attribute, and the information such as the channel and band of the associated NAN availability attribute is obtained.

In the embodiment of the present disclosure, the entry control field is added to the schedule entry subfield, and the priority subfield and the low latency flag bit are included in this field. The priority subfield codes are shown in Table 3.

| Priority Value |
|---|
| 1 |
| 2 |
| 0 |
| 3 |
| 4 |
| 5 |
| 6 |
| 7 |

The priorities of the FAWs correspond to the types or priorities of the services one-to-one. In the FAW with a specified priority, only the data frame of the service whose priority is not lower than the priority of the FAW is allowed to be sent. The data frame of the high-priority service is queued in the queue of the corresponding priority, and the channel is accessed in a higher priority manner, such as using the high-priority EDCA parameter. The data frame of low-priority service accesses the channel in a low-priority manner, such as using the low-priority EDCA parameter.

The data frame of the high-priority service may be sent in the low-priority FAW or CRB. At this case, since the data frame of the high-priority service and the data frame of the low-priority service are not in the same queuing queue and the priorities of the access channels are also different, the requirement of prioritizing the transmission of the data frame of the high-priority service may also be satisfied.

In an example, the NAN availability attribute, NDC attribute flag FAW or CRB priority is shown in Table 4.

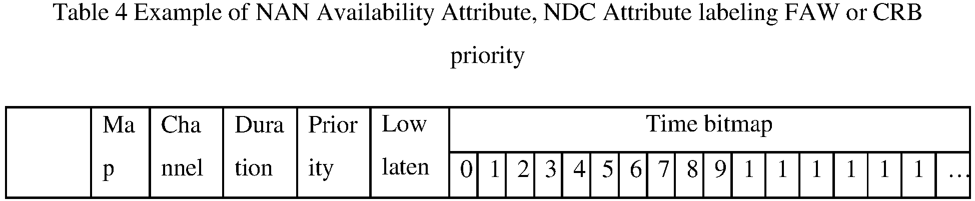

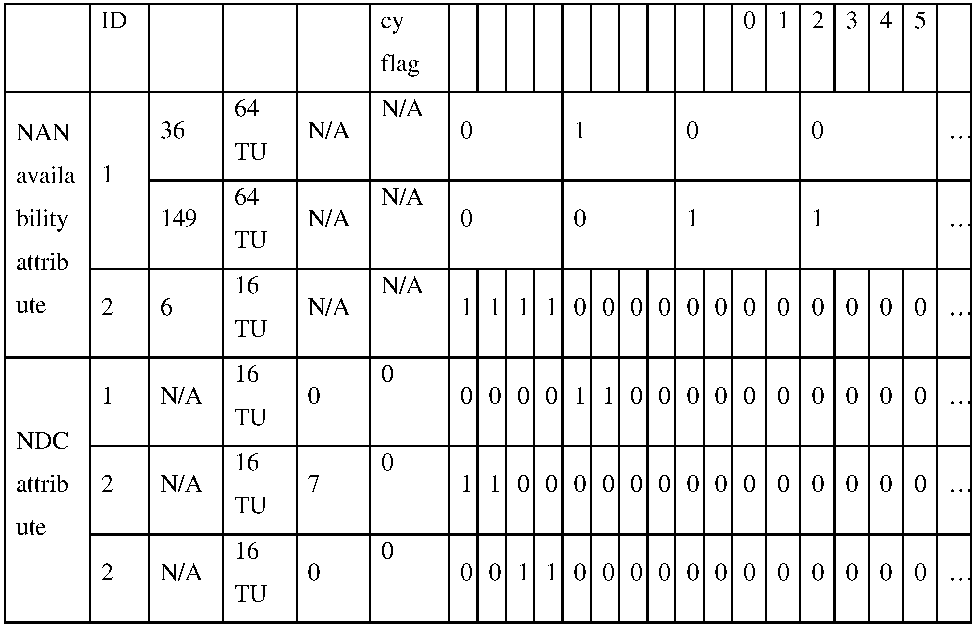

In Table 4, there are two NAN availability attributes.

The Map ID is 1: the working channels are 36 and 149, the duration of each bit in the map is 64 TUs (1TU = 1024us). There are two Availability Entries, the FAW duration represented by the Entry of channel 36 is 64 ~ 127TU after DW, and the FAW duration represented by the Entry of channel 149 is 128 ~ 255TU after DW.

Map ID is 2: the working channel is 6, there is one Availability Entry, the duration of each bit is 16 TUs, and this Entry represents the FAW operating on the channel 6 and with the duration being 0 to 63TU after DW.

There is only one NDC attribute in Table 4, and this NDC attribute has 3 schedule entries.

The Map ID of the first schedule entry is 1, and is associated with the NAN availability attribute with Map ID being 1. Therefore, the working channels of this schedule entry are 36 and 149. The duration of each bit is 16 TUs, and the Priority value is 0, so this schedule entry represents the FAW with a priority of 0 and with a duration of 64 ~ 95TU after the DW. Moreover, because the FAW during this time only occupies channel 36, the FAW with a Priority of 0 represented by this schedule entry occupies channel 36.

The Map ID of the second schedule entry is 2, and is associated with the NAN availability attribute with the Map ID being 2, so the working channel is 6. Moreover, the value of the priority of the schedule entry is 7, which indicates that the priority of the FAW operating on the channel 6 and with the duration of 0 to 31TU after the DW is 7.

The Map ID of the third schedule entry is 2, but the priority value is 0, thus this entry indicates a FAW operating on channel 6 and with the priority of 0 and the duration of 32 to 63TU after the DW.

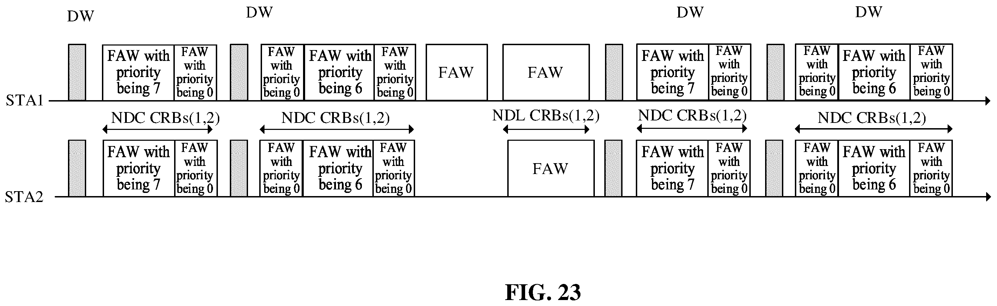

Assuming that STA1 has 3 services with different priorities, and the priorities of the services are 0, 6 and 7, respectively. After the data path establishment process, the case of the NDL CRB, the NDC CRB, and the negotiated FAW or CRB priority between the STA1 and the STA2 are illustrated in FIG. 23.

The priorities of all FAWs or CRBs in NDC are divided into: 0, 6, 7.

During the FAW or CRB with priority 7: STA1 and STA2 only transmit the data frame of the service with priority 7, and do not transmit the data frame of services with other priorities.

During the FAW or CRB with priority 6: STA1 and STA2 may transmit the data frames of the services with priority 7 and priority 6, and does not transmit the data frame of the service with priority 0.

During the FAW or CRB with priority 0: STA1 and STA2 may transmit the data frames of the services with any priority.

The FAW or CRB is labeled and classified according to the priority of the service, such that the device may only send the data frame of service, in the FAW or CRB, whose priority is not lower than the priority of the FAW or CRB, and this can ensure the quality of the service with specific priority.

During the FAW or CRB with priority 0, STA1 and STA2 can transmit data frames of three services. The priorities of these three services are different, thus the data frames are queued in different queues, and the parameters used by accessing the channel are also different. The EDCA parameter used by the data frame of the service with high priority has higher priority, which can meet the requirement of prioritizing the transmission of data frame of the service with high-priority in the same FAW or CRB to a certain extent.

The low latency flag bit in the entry control field is used for indicating whether the entry is used for data frame transmission of low latency service. The function of the low latency flag bit is shown in Table 5.

**Table 5 NAN Availability Attribute, NDC Attribute labeling FAW**

| Low latency flag | Function |
|---|---|
| 1 | Indicating that the schedule entry is exclusively for data frame transmission of low latency service. |
| 0 | Indicating that the schedule entry is not exclusively for data frame transmission of low latency service, and the priority of the schedule entry depends on the value of the priority subfield. |

Based on Table 5, if the value of the low latency flag bit is 1, it indicates that the scheduling is a schedule entry specifically for the data frame transmission of the low latency service, and the value of the priority subfield needs to be set to 7.

The example of NAN availability attribute, NDC attribute labeling FAW or CRB low latency category are shown in Table 6.

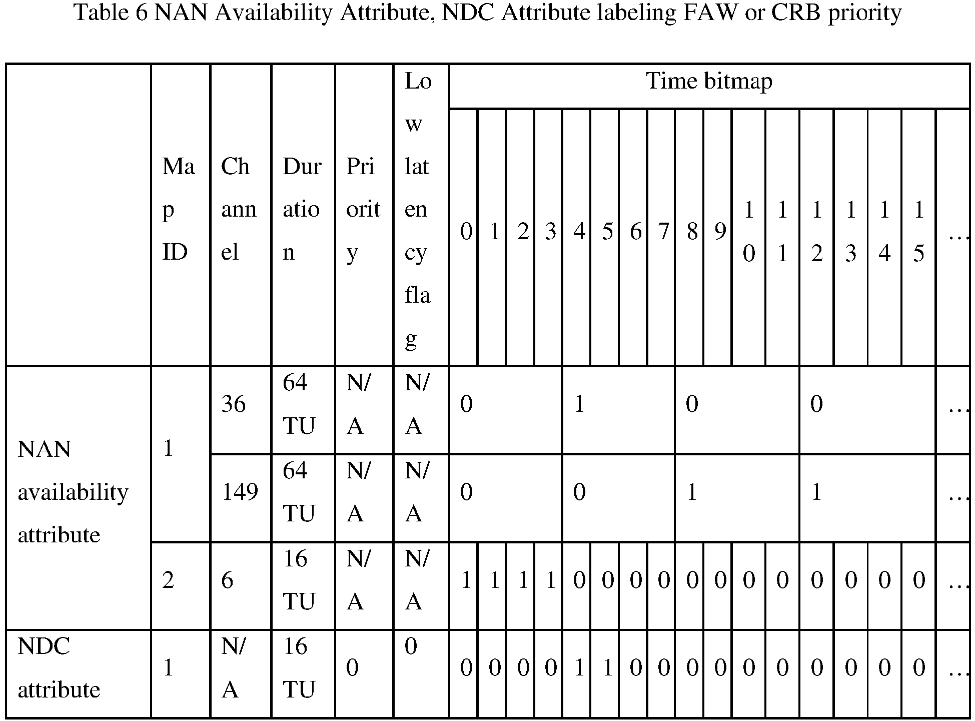

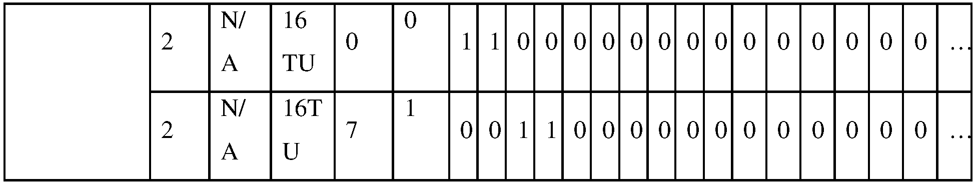

In Table 6, there are two NAN availability attributes.

The map ID is 1: the working channels are 36 and 149, the duration of each bit in the map is 64 TUs (1TU = 1024us). There are two Availability Entries, the FAW duration represented by the Entry of channel 36 is 64 ~ 127TU after DW, and the FAW duration represented by the Entry of channel 149 is 128 ~ 255TU after DW.

Map ID is 2: the working channel is 6, there is one Availability Entry, the duration of each bit is 16 TUs, and this Entry represents the FAW operating on the channel 6 and with the duration of 0 to 63 TU after DW.

There is only one NDC attribute in Table 6, and this NDC attribute has 3 schedule entries.

The Map ID of the first schedule entry is 1, and is associated with the NAN availability attribute with Map ID being 1. Therefore, the working channels of this schedule entry are 36 and 149. The duration of each bit is 16TUs, and the Priority value is 0, so this schedule entry represents the FAW with a priority of 0 and with a duration of 64 ~ 95TU after the DW. Moreover, because the FAW during this period only occupies channel 36, the FAW with a Priority of 0 represented by this schedule entry occupies channel 36.

The Map ID of the second schedule entry is 2, and is associated with the NAN availability attribute with the Map ID being 2, so the working channel is 6. Moreover, the value of the priority of the schedule entry is 0, which indicates that the priority of the FAW operating on the channel 6 and with the duration of 0 ~ 31TU after the DW is 0.

The Map ID of the third schedule entry is 2, the priority value is 7 and the low latency flag bit is 1, thus this entry indicates a FAW for the low latency service which operates on channel 6 and has a duration of 32 ~ 63TU after the DW.

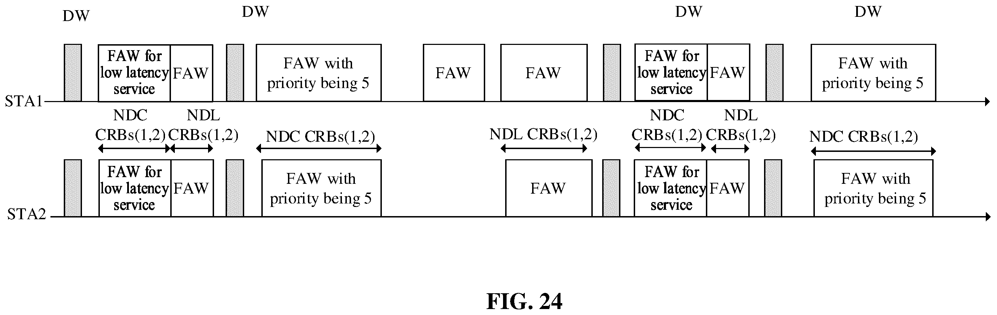

Assuming that STA1 has 2 different services, one of the services is a low-latency service and the other is a non-low-latency service, and the priority of the service is 5. After the data path establishment process, the case of the NDL CRB, the NDC CRB, and the negotiated FAW or CRB priority between the STA1 and the STA2 are illustrated in FIG. 24.

All FAWs or CRBs in the NDC are divided into FAWs or CRBs used for low latency service and FAWs or CRBs used for the service with specific priority.

In the FAW or CRB used for low-latency service, only the data frame of low-latency service will be scheduled and transmitted;
In the FAW of priority 5, the data frame of the service with priority 5 is scheduled, and the data frame of the low latency service may also be scheduled. At this case, the priority of the data frame of the low latency service is 7, and a high-priority access manner is used, such as using the EDCA queuing queue and parameter of priority 7, while the data frame of the service of priority 5 uses the EDCA queuing queue and parameter of priority 5.

By dividing the FAWs or CRBs into the FAWs or CRBs for the low-latency service and the FAWs or CRBs for the non-low-latency service, the service requirement of the low-latency service can be satisfied. If the data frame of the low-latency service needs to be transmitted in the FAW or CRB used for the non-low-latency service, a high-priority access manner is used, and the requirement of prioritizing the transmission of the data frame of the low-latency service can also be satisfied to a certain extent.

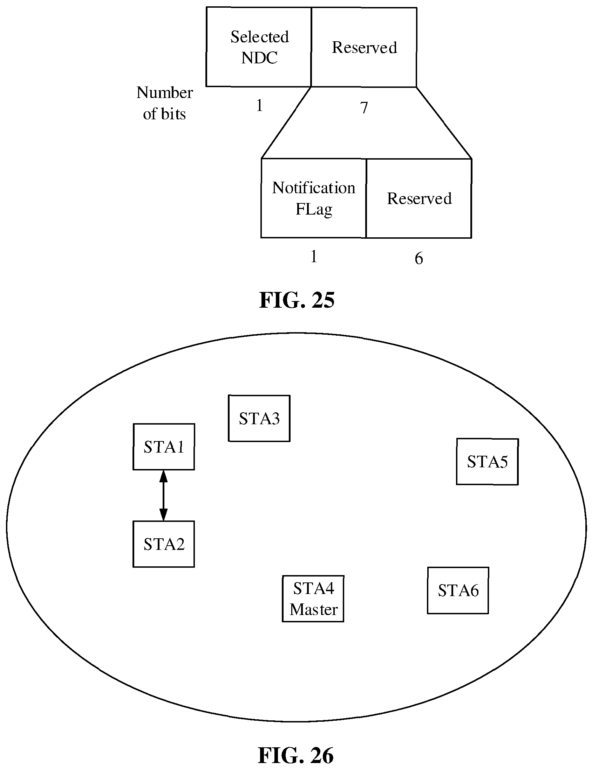

The format of the Attribute Control field in the NDC attribute is illustrated in FIG. 25 and includes the following fields:
Selected NDC: indicating whether the FAW or CRB information indicated in the NDC attribute is the FAW or CRB of an existing NDC;
Notification Flag: indicating whether the NDC attribute is broadcast instead by the master or non-master sync device.

In the embodiment of the present disclosure, one of the seven bits originally reserved in the Attribute Control is selected as the notification flag, and the notification flag is used for indicating whether the NDC schedule information of FAW or CRB including the priority is notified by both the service publisher and the service subscriber or notified instead by the master or non-master sync device. It is stipulated that after the establishment of the NDC, STAs of both establishing sides need to send the SDF or the NAF in the subsequent DW, which carries the NDC schedule information of FAW or CRB including the priority. Herein,
1. When the frame sent by the publisher or the subscriber of the service includes the NDC schedule information of FAW or CRB including the priority, the value of the notification flag is set to 0, and the value of the notification flag may be set to 1 if the serving devices of both sides do not want the master or non-master sync device to broadcast instead.
2. When the frame transmitted by the master or non-master sync device carries the NDC schedule information of FAW or CRB including the priority, the value of the notification flag is set to 1.
3. If the publisher or subscriber of the service is a master or a non-master sync device, when the sent frame includes the NDC schedule information of FAW or CRB including the priority, the value of the notification flag is set to 1.
4. When the master or non-master sync device receives a frame in which the notification flag is 0 and the NDC schedule information of FAW or CRB including the priority is included, it is necessary to include the NDC schedule information of the prioritized FAW or CRB in the synchronization beacon frame sent in the subsequent DW.
5. When the master or non-master sync device receives a frame in which the notification flag is 1 and including the NDC schedule information of FAW or CRB including the priority, there is no need to notify instead.

It is assumed that STA1 and STA2 have established the NDC, and the labeling cases of the FAW or CRB are illustrated in FIG. 23. Assuming that the cases of some devices in the NAN cluster is as illustrated in FIG. 26. There are the following three cases.

Case 1, STA1 and STA3 establish or join an NDC.

Case 2, STA3 and STA4 establish or join an NDC.

Case 3, STA5 and STA6 establish or join an NDC.

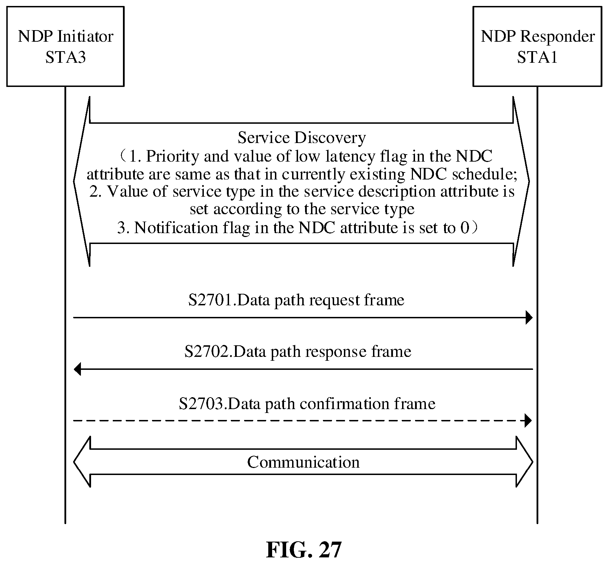

Regarding case 1: STA1 and STA3 negotiate during the communication path establishment process, STA1 carries the NAN availability attribute and the NDC attribute in the frame to inform STA3 of the current NDC CRB situation, including FAW tag and category information. If the priority of the service between the STA3 and the STA1 is 7, the STA1 and the STA3 may establish a new NDC, and the new NDC may use the resources owned by any one of the devices on both sides, or may choose to join the NDC carried by the STA1. If the priority of the service between STA3 and STA1 is 6, they may choose to establish a new NDC, and the NDC CRB cannot occupy the FAW with priority 7. If the priority of the service between STA3 and STA1 is 5 or lower, it is only possible to choose to establish a new NDC, and the NDC CRB cannot occupy the FAW with priority 6 or 7. The data path establishment process of STA1 and STA3 is illustrated in FIG. 27, and the process includes the steps S2701 to S2703. At S2701, the NDP initiator, i.e., the NDP requester, sends the data path request frame to the NDP responder. At S2702, the NDP responder sends the data path response frame to the NDP initiator. At S2703, The NDP initiator sends the data path confirmation frame to the NDP responder. In the service discovery stage before the data path establishment process, the values of the priority and the low service delay ID in the NDC attribute are consistent with those in the NDC schedule, the value of the service type in the service description attribute is set according to the service type, and the notification flag in the NDC attribute is set to 0.

Regarding Case 2: during DW, the STA1 may enable the SDF or the NAF to carry the NAN availability attribute and the NDC attribute to broadcast the NDC schedule information between the STA1 and the STA2, and the STA2 may also enable the NAF to carry the NAN availability attribute and the NDC attribute to broadcast the NDC schedule information between the STA1 and the STA2. In addition, the master, non-master sync devices around STA1 and STA2 may also broadcast, instead of STA1 and STA2, the NDC scheduling information between STA1 and STA2 by carrying the NAN availability attribute and the NDC attribute in the synchronization beacon frame.

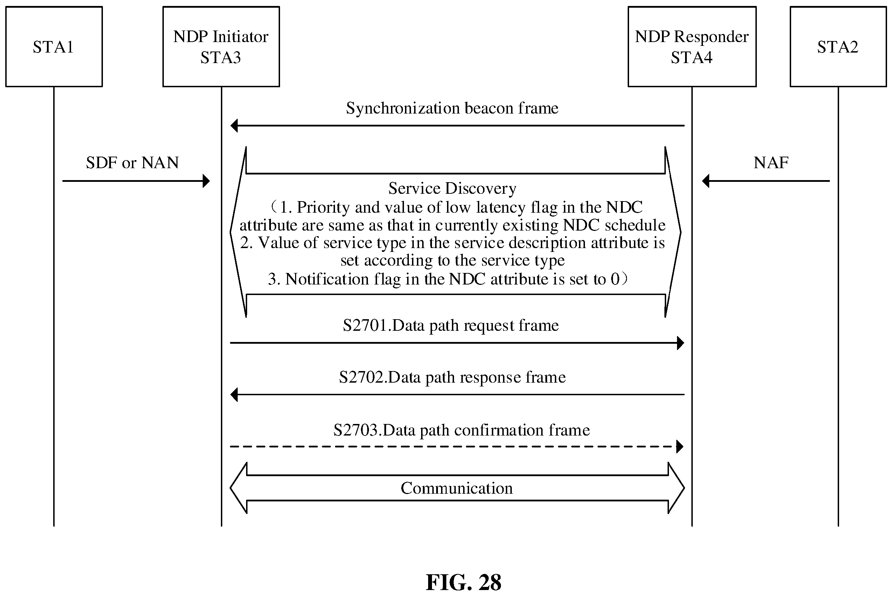

After receiving the NDC schedule information between STA1 and STA2, STA3 and STA4 use the NDC schedule information between STA1 and STA2 as a reference when establishing or joining the NDC. If the priority of the service between the STA3 and the STA4 is 7, the STA4 and the STA3 may establish a new NDC, and the new NDC may use the resources owned by any one of the devices on both sides, or may choose to join the NDC carried by the STA1. If the priority of the service between STA3 and STA4 is 6, it can only choose to establish a new NDC, and the NDC CRB cannot occupy the FAW with priority 7. If the priority of the service between STA3 and STA4 is 5 or lower, it can only choose to establish a new NDC, and the NDC CRB cannot occupy the FAW with priority 7 or 6. The data path establishment process of STA3 and STA4 is illustrated in FIG. 28, and includes S2701 to S2703. Before the service discovery stage, the STA 3 receives the NDC schedule information broadcast by the STA 1 through the SDF or the NAF, the STA 4 receives the NDC schedule information between the STA 1 and the STA 2 broadcast by the STA 2 through the NAF, and after receiving the NDC schedule information between the STA 1 and the STA 2, the STA 3 and the STA 4 broadcast through the synchronization beacon frame. The value of the notification ID carried in the SDF or NAF broadcast by STA1 and the NAF broadcast by STA2 is 0, it indicates that the NDC schedule between STA1 and STA2 is broadcast by a master or non-master sync device instead. At this case, in a case that STA3 is a master or non-master sync, or, STA4 is master or non-master sync, the received NDC schedule between STA1 and STA2 is broadcast through the synchronization beacon frame. At this case, the value of the notification ID in the synchronization beacon frame is 1, it indicates that the master or non-master sync device is no longer instead broadcast the NDC schedule between STA1 and STA2.

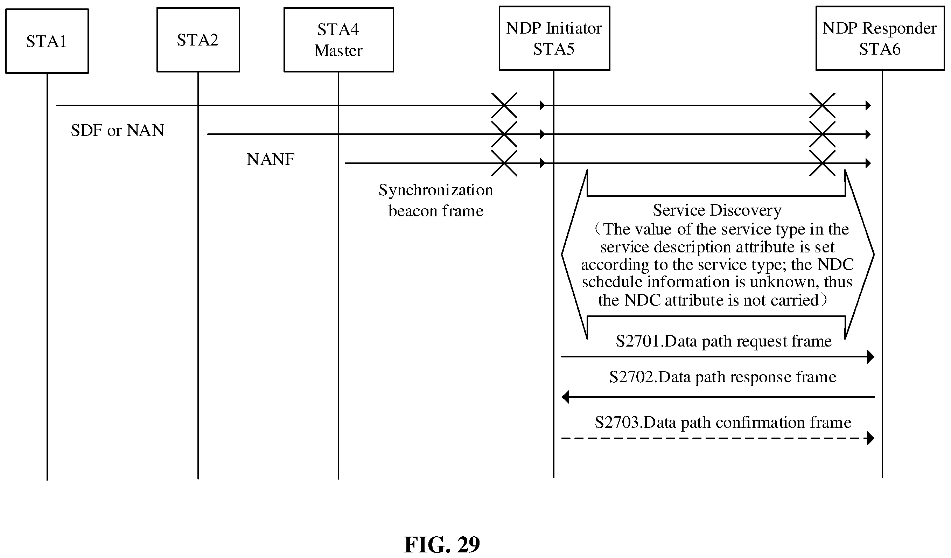

Regarding case 3: Since STA5 and STA6 are relatively far away from STA1 and STA2, as illustrated in FIG. 29, STA5 and STA6 cannot receive the SDF or NAF broadcast by STA1 and the NAF frame broadcast by STA2, and cannot receive the synchronization beacon frame carrying the NDC schedule information between STA1 and STA2 broadcast by STA4 as a master or non-master sync device, so STA5 and STA6 do not know the current NDC schedule information between STA1 and STA2. STA 5 and STA 6 may establish a new NDC according to their own resources. The data path establishment procedure of STA5 and STA6 is illustrated in FIG. 29, and includes steps S2701 to S2703. The value of the notification ID carried in the SDF or NAF broadcast by STA1 and the NAF broadcast by STA2 is 0, it indicates that the NDC schedule between STA1 and STA2 is broadcast by a master or non-master sync device instead. At this case, in a case that STA4 is a master or non-master sync, the received NDC schedule between STA1 and STA2 is broadcast through the synchronization beacon frame. At this case, the value of the notification ID in the synchronization beacon frame is 1, it indicates that the master or non-master sync device is no longer instead broadcast the NDC schedule between STA1 and STA2.

In the service discovery process illustrated in FIG. 29, the value of the service type in the service description attribute is set according to the service type, and in the case that the STA5 and the STA6 do not receive the NDC schedule between the STA1 and the STA2, the NDC schedule between the STA1 and the STA2 is not carried in the SDF.

Through such a FAW labeling and classification method, it is possible to ensure that only the service whose priority is not lower than the priority of the FAW is sent in the same segment of FAW or CRB, such that the number of data frames to be sent in the same FAW or CRB is reduced, and requirement for different types of services in the NAN network may be ensured.

Assuming that the priority of the service in the embodiment is 4, there are two cases.

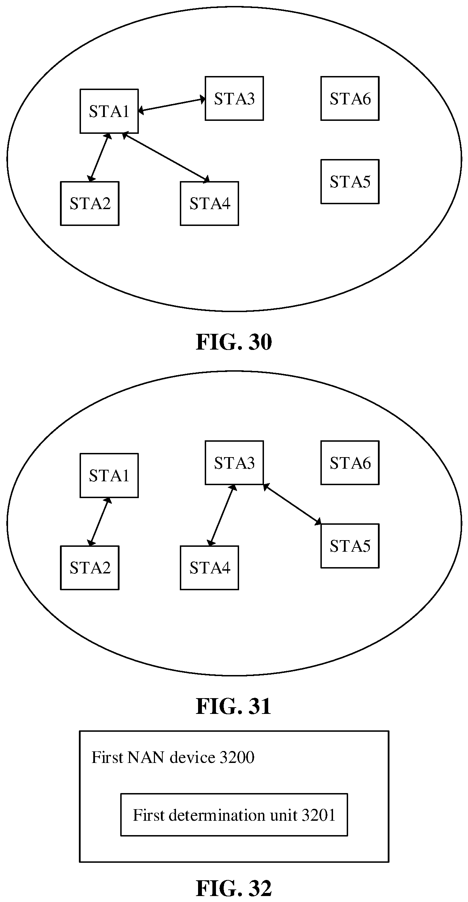

As illustrated in FIG. 30, a plurality of STAs are subscribed to the same service. Herein, STA2, STA3, and STA4 subscribe to STA1 for the same service.

As illustrated in FIG. 31, there are a plurality of services with priority of 4, and there are a plurality of STA pairs. Herein, STA2 subscribes to the service of STA1 and the priority of the service is 4, and STA4 and STA5 subscribe to the service of STA3 and the priority of the service is 4.

For the first case, after the STA 1 and other subscribers end the communication of the service, the sent frame no longer includes the NDC schedule information of the FAW or the CRB with the priority being 4. When the master or non-master sync device does not receive a frame including the NDC schedule information of the FAW or CRB with priority being 4 and in which the value of the notification flag subfield in the NDC attribute is 0 within continuous DWs, the master or non-master sync device considers that the FAW or CRB with priority being 4 has been revoked, and the scheduler of the master or non-master sync device deletes the record including the NDC schedule information of the FAW or CRB with priority 4.

In the subsequent DW, the master or non-master sync device does not carry NDC schedule information of the FAW or CRB with priority being 4 in the synchronization beacon frame. The synchronization beacon frame does not include the NDC schedule information of the FAW or CRB with priority being 4, then other NAN devices will not receive the NDC schedule information of the FAW or CRB with priority being 4 in the following DW, and the schedulers of these NAN devices will also delete this record.

In this way, it is possible to notify in the network that the FAW or CRB with priority being 4 has changed to a normal FAW.

For the second case, when the service with the priority being 4 between the STA1 and the STA2 ends, the STA1 no longer broadcasts the NDC schedule information of the FAW or CRB with priority being 4. However, the STA3, STA4 and STA5 continue to broadcast, thus the master or non-master sync device can still receive the frame of the NDC schedule information of the FAW with priority being 4.

If the notification flag of the NDC attribute in the frame is 1, in the subsequent DW, the synchronization beacon frame sent by the master or non-master sync device will still carry the NDC schedule information of the FAW with priority being 4. If the notification flag of the NDC attribute in the frame is 0, the synchronization beacon frame sent by the master or non-master sync device in the subsequent DW does not carry the NDC schedule information of the FAW with priority being 4.

Only when the STA3 and the subscriber also end the service with priority being 4, the STA 3 and its subscriber will not broadcast the NDC schedule information of the FAW or CRB with priority being 4. As such, the master or non-master sync device does not receive the frame including the NDC schedule information of the FAW or CRB with priority being 4 and in which the value of the notification flag subfield in the NDC attribute is 0 within continuous DWs, the master or non-master sync device considers that the FAW or CRB of priority 4 has been revoked, and the scheduler of the master or non-master sync device deletes the record including the NDC schedule information of the FAW or CRB with priority being 4.

In the subsequent DW, the master or non-master sync device does not carry NDC schedule information of the FAW or CRB with priority being 4 in the synchronization beacon frame. The synchronization beacon frame does not include the NDC schedule information of the FAW or CRB with priority being 4, then other NAN devices will not receive the NDC schedule information of the FAW or CRB with priority being 4 in the following DW, and the schedulers of these NAN devices will also delete this record.

The preferred embodiments of the present disclosure have been described in detail with reference to the accompanying drawings. However, the present disclosure is not limited to the specific details in the above embodiments. Various simple modifications can be made to the technical solution of the present disclosure within the technical conception scope of the present disclosure, and these simple modifications all belong to the protection scope of the present disclosure. For example, each of the specific technical features described in the above specific embodiments may be combined in any suitable manner without contradiction, and various possible combinations are not further described in the present disclosure in order to avoid unnecessary repetition. For another example, any combination may be made between the various embodiments of the present disclosure, and the combination is likewise to be regarded as the disclosure of the present disclosure so long as it does not depart from the concept of the present disclosure. For another example, on the premise that there is no conflict, each embodiment described in the present application and/or the technical features in each embodiment can be arbitrarily combined with the prior art, and the technical solution obtained after the combination should also fall within the scope of protection of the present application.

It is further to be understood that, in various method embodiments of the present disclosure, the values of the sequence numbers of the above-described processes do not mean the sequence of execution, and the execution order of each process should be determined by its function and inherent logic, and should not limit the implementation of the embodiments of the present disclosure. In addition, in the embodiments of the present disclosure, the terms "downlink", "uplink" and "sidelink" are used to indicate the transmission direction of the signal or data. The term "downlink" is used for indicating that the transmission direction of the signal or data is a first direction transmitted from the site to the user equipment of the cell, and "uplink" is used for indicating that the transmission direction of the signal or data is a second direction transmitted from the user equipment of the cell to the site. The "sidelink" is used for indicating that the transmission direction of the signal or data is a third direction transmitted from the user equipment 1 to the user equipment 2. For example, "downlink signal" indicates that the transmission direction of the signal is the first direction. Further, in the embodiments of the present disclosure, the term "and/or" is merely a kind of association relationship describing the associated objects, and indicates that there may be three kinds of relationships. Specifically, A and/or B may represent three cases: A exists alone, both A and B exist, and B exist alone. Further, the character "/" herein generally means that the associated objects has an "or" relationship.

FIG. 32 is a schematic diagram of the structure and composition of the first NAN device according to an embodiment of the present disclosure. As illustrated in FIG. 32, the first NAN device 3200 includes a first determination unit 3201.

The first determination 3201 is configured to determine at least one first Common Resource Block (CRB) corresponding to a first service based on a service type and/or a first priority of the first service and a second priority of each of at least one CRB of a first NAN data cluster (NDC), the first service being scheduled within the at least one first CRB, the first NAN belonging to the first NDC.

It is to be understood that the first NAN device further includes a communication unit for transmitting and receiving data.

In some embodiments, the first determination unit is further configured to determine the at least one first CRB based on the type or the first priority of the first service and the second priority of each of the at least one CRB of the first NDC.

In some embodiments, the service type and/or the first priority is labeled based on at least one of:
first indication information for indicating the service type of the first service, herein different service types correspond to different first priorities; or
second indication information for indicating whether the first service is a low-latency service, herein the low-latency service has a highest first priority.

In some embodiments, the second priority is labeled based on at least one of:
third indication information for indicating a second priority of a corresponding CRB; or
fourth indication information for indicating whether a corresponding CRB is used for a low-latency service, a CRB used for a low-latency has a highest second priority.

In some embodiments, a second priority corresponding to a first priority of at least one service scheduled within a CRB is higher than or equal to the second priority of the CRB.

In some embodiments, when at least two services are scheduled within a CRB, first priorities of different services of the at least two services are same or different.

In some embodiments, a first priority of a second service of the at least two services is higher than a first priority of a third service of the at least two services, then a priority of an access category (AC) of the second service is higher than a priority of an AC of the third service.

In some embodiments, when a CRB is labeled for low latency service, only low latency service is allowed to be scheduled within the CRB.

In some embodiments, when the CRB is labeled for a non-low latency service, a service scheduled within the CRB includes a low latency service and/or a non-low latency service.

In some embodiments, when a service scheduled within the CRB includes a low-latency service and a non-low-latency service, a priority of an AC of the low-latency service is higher than or equal to a priority of an AC of the non-low-latency service.

In some embodiments, the first NAN device further includes a second determination unit. The second determination unit is configured to determine the first NDC according to the service type and/or the first priority of the first service. The first NDC is an NDC to which a first NDL between the first NAN device and a second NAN device belongs, the first service is provided by the first NAN device to the second NAN device, or the first service is provided by the second NAN device to the first NAN device.

In some embodiments, the first NAN device further includes a first communication unit. The first communication unit is configured to send first information and second information to the second NAN device; or receive the first information and the second information sent by the second NAN device, herein the first information is used for indicating the first service, and the second information is used for indicating the service type and/or the first priority of the first service.

In some embodiments, the first information and the second information are carried in a first frame, and the first frame is used for service discovery.

In some embodiments, the second information is located in a service descriptor attribute of the first frame.

In some embodiments, the second information is located in a service information field in the service descriptor attribute.

In some embodiments, the second information includes at least one of:
first indication information for indicating the service type of the first service, herein different service types correspond to different first priorities, and the first indication information is located in a first subfield of the service information field; or
second indication information for indicating whether the first service is a low-latency service, herein the low-latency service has a highest first priority, and the second indication information is located in a second subfield of the service information field.

In some embodiments, the first NDC is an already established NDC or a newly established NDC.

In some embodiments, the case where the first NDC is an already established NDC includes following case.

The CRB(s) of the already established NDC includes a second CRB, a second priority of the second CRB is lower than or equal to a first target priority, and the first target priority is a second priority corresponding to the first priority of the first service.

In some embodiments, the case where the first NDC is the newly established NDC includes at least one of the following cases.
the first NAN device has not joined an already established NDC;
the first NAN device has joined an already established NDC;
the first NAN device has joined an already established NDC, and the CRB(s) of the already established NDC includes a second CRB, a second priority of the second CRB is lower than or equal to a first target priority, and the first target priority is a second priority corresponding to the first priority of the first service; or
the first NAN device has joined an already established NDC, and CRB(s) of the already established NDC does not include the second CRB.

In some embodiments, the already established NDC is used for a first NDL or a second NDL, the second NDL is an NDL between the first NAN device and a third NAN device.

In some embodiments, when the first NDC is a newly established NDC, the first NAN device has joined a second NDC that has been established, and the second NDC is used for the second NDL, a newly added CRB of the first NDC with respect to the second NDC partially overlaps or does not overlap in time domain and/or frequency domain with a CRB of the second NDC.

In some embodiments, when a newly added third CRB of the second NDC with respect to the second NDC partially overlaps in time domain and/or frequency domain with a fourth CRB of the first NDC, a second priority of the fourth CRB is higher than or equal to a second priority of the third CRB.

In some embodiments, when a priority of the fourth CRB is same as a priority of the third CRB, a priority of an AC of a service scheduled within the fourth CRB is higher than a priority of an AC of a service scheduled within the third CRB at an overlapped part of the third CRB and the fourth CRB.

In some embodiments, the first NAN device further includes a second communication unit. The second communication unit is configured to receive a second frame sent by the second NAN device, or the first NAN device sends a second frame to the second NAN device. The second frame is used for establishing a first NDP in the first NDL, and the first NDP is used for sending the first service.

In some embodiments, when the first NDC is a newly established NDC, the second frame carries the third information and the fourth information. The third information is used for indicating a first further availability window (FAW) and the fourth information is used for indicating a second priority of the first FAW, the second priority of the first FAW is a first target priority, and the first target priority is a second priority corresponding to the first priority of the first service.

In some embodiments, the fourth information is carried in an NDC attribute of the second frame.

In some embodiments, the fourth information is carried in a schedule entry field in a schedule entry list of the NDC attribute.

In some embodiments, the fourth information includes at least one of:
fifth indication information for indicating the priority of the first FAW, herein the first indication information is located in a first subfield of the schedule entry field; or
sixth indication information for indicating whether the first FAW is used for a low-latency service, herein a first FAW used for the low-latency service has a highest priority, and the second indication information is located in a second subfield of the schedule entry field.

In some embodiments, when the first NDC is an already established NDC and is used for the first NDL, the second frame does not carry CRB(s) of the already established NDC; or
when the first NDC is an already established NDC and is used for a second NDL, the second frame carries the CRB(s) of the already established NDC, and the second NDL is an NDL between the first NAN device and a third NAN device.

In some embodiments, the first NAN device further includes a third communication unit. The third communication unit is configured to receive a CRB of a second NDC sent by the third NAN device when the already established NDC is used for a second NDL, and the second NDC is an already established NDC for the second NDL.

In some embodiments, the third communication unit is further configured to receive a third frame sent by the third NAN device, herein the third frame carries the CRB of the second NDC, and the third frame belongs to a broadcast frame.

In some embodiments, the third frame further carries fifth information, the fifth information is used for indicating whether the CRB of the second NDC carried by the third frame is broadcast instead by an NAN control device or a NAN non-control device in a synchronous state.

In some embodiments, when the first NAN device is an NAN control device or an NAN non-control device in a synchronous state, and the fifth information indicates that the CRB of the second NDC carried by the third frame is broadcast instead by an NAN control device or an NAN non-control device in a synchronous state, the method further includes following operation.

The first NAN device sends a fourth frame, herein the fourth frame carries the CRB of the second NDC, and the fourth frame belongs to a broadcast frame.

In some embodiments, the fifth information is located in a first field of an NDC attribute in the third frame.

In some embodiments, the first NAN device further includes a deletion unit. The deletion unit is configured to delete the CRB of the second NDC from local when the first NAN device does not receive the CRB of the second NDC for a first number of consecutive discovery windows (DWs).

In some embodiments, the first NAN device further includes a fourth communication unit. The fourth communication unit is further configured to broadcast a CRB of the first NDC.

In some embodiments, the fourth communication unit is further configured to send a fifth frame, herein the fifth frame carries the CRB of the first NDC, and the fifth frame belongs to a broadcast frame.

In some embodiments, the fifth frame further carries sixth information, and the sixth information is used for indicating whether the CRB schedule of the first NDC carried by the fifth frame is broadcast instead by an NAN control device or a NAN non-control device in a synchronous state.

In some embodiments, the sixth information is located in a first field of an NDC attribute in the fifth frame.

In some embodiments, the first field is a reserved field.

In some embodiments, the broadcast frame includes at least one of:
a service discovery frame;
a proximity aware network action frame (NAF); or
a synchronization beacon frame.

It is to be understood for those skilled in the art that the above-described description of the device for wireless communication according to the embodiments of the present disclosure may be understood with reference to the description of the method for service scheduling according to the embodiments of the present disclosure.

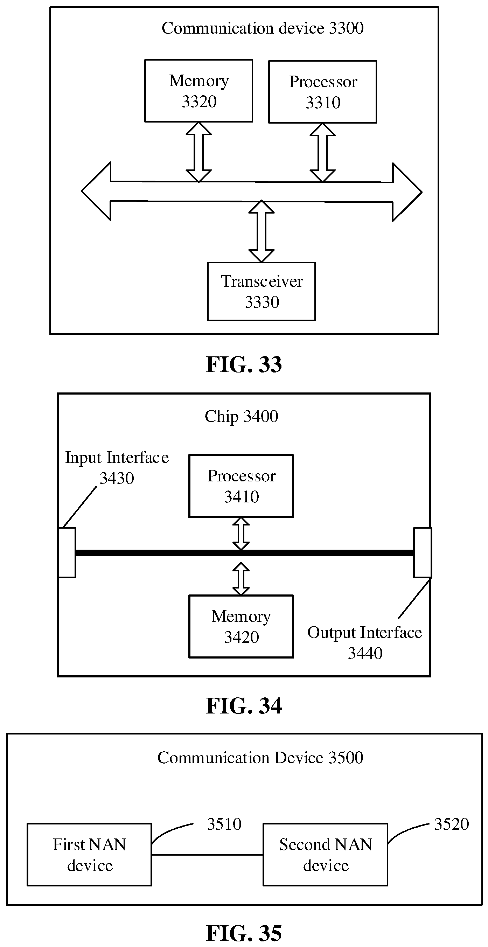

FIG. 33 is a schematic structural diagram of a communication device 3300 according to an embodiment of the present disclosure. The communication device may be a first NAN device. The communication device 3300 illustrated in FIG. 33 includes a processor 3310, and the processor 3310 can call and run the computer program from memory to implement the method in the embodiments of the present disclosure.

Optionally, as illustrated in FIG. 33, the communication device 3300 may further include a memory 3320. The processor 3310 can call and run the computer program from memory 3320 to implement the method in the embodiments of the disclosure.

The memory 3320 may be a separate device independent of or integrated into the processor 3310.

Optionally, as illustrated in FIG. 33, the communication device 3300 may further include a transceiver 3330, and the processor 3310 may control the transceiver 3330 to communicate with other devices, particularly, to send information or data to other devices or receive information or data sent by other devices.

The transceiver 3330 may include a transmitter and a receiver. The transceiver 3330 may further include an antenna, and the number of the antennas may be one or more.

Optionally, the communication device 3300 may specifically be the first NAN device in the embodiments of the present disclosure, and the communication device 3300 may implement the corresponding processes implemented by the first NAN device in the methods of the embodiments of the disclosure. For the sake of brevity, it will not be elaborated herein.

FIG. 34 is a schematic structural diagram of a chip according to an embodiment of the present disclosure. The chip 3400 illustrated in FIG. 34 includes processor 3410, and processor 3410 can call and run computer programs from memory to realize the method in the embodiments of the present disclosure.

Optionally, as illustrated in FIG. 34, the chip 3400 may further include a memory 3420. The processor 3410 can call and run the computer program from memory 3420 to implement the method in the embodiments of the disclosure.

The memory 3420 may be a separate device independent of or integrated into the processor 3410.

Optionally, the chip 3400 may also include an input interface 3430. The processor 3410 can control the input interface 3430 to communicate with other devices or chips, and in particular can obtain information or data sent by other devices or chips.

Optionally, the chip 3400 may also include an output interface 3440. The processor 3410 may control the output interface 3440 to communicate with other devices or chips, and in particular may output information or data to other devices or chips.

Optionally, the chip can be applied to the first NAN device in the embodiments of the present disclosure, and the chip can realize the corresponding process realized by the first NAN device in each method of the embodiments of the disclosure. For the sake of brevity, it will not be elaborated herein.

It is to be understood that the chips mentioned in the embodiments of the present disclosure can also be referred to as system level chips, system chips, chip systems or on-chip system chips, etc.

FIG. 35 is a schematic block diagram of a communication system 3500 according to an embodiment of the present disclosure. As illustrated in FIG. 35, the communication system 3500 includes a first NAN device 3510 and a second NAN device 3520.

The first NAN device 3510 may be configured to implement the corresponding functions implemented by the first NAN device in the above-mentioned method, and the second NAN device 35520 may be configured to implement the corresponding functions implemented by the non-access point device in the above-mentioned method. For the sake of simplicity, it will not be elaborated here.

It is to be understood that the processor of the embodiment of the present disclosure may be an integrated circuit chip with signal processing capability. During the implementation, the various steps of the above method embodiment may be implemented by the integrated logic circuit of hardware in processor or instructions in the form of software. The above processors can be general purpose processors, digital signal processors (DSPs), application specific integrated circuits (ASICs), field programmable gate arrays (FPGAs) or other programmable logic devices, discrete gate or transistor logic devices, and discrete hardware components. The disclosed methods, steps and logic block diagrams in the embodiments of the present disclosure can be implemented or executed. The general-purpose processor may be a microprocessor or the processor may be any conventional processor or the like. The steps of the method disclosed in connection with the embodiment of the present disclosure can be directly embodied in the execution completion of the hardware decoding processor, or by the combination of the hardware and software modules in the decoding processor. The software module can be located in random memory, flash memory, read-only memory, programmable read-only memory or electrically erasable programmable memory, register and other mature storage media in the art. The storage medium is located in the memory, and the processor reads the information in the memory and completes the steps of the above method in combination with its hardware.

It is to be understood that the memory in the embodiments of the present disclosure may be volatile memory or non-volatile memory, or may include both volatile and non-volatile memory. The nonvolatile memory can be read-only memory (ROM), programmable ROM (PROM), erasable Prom (EPROM), electrically erasable EPROM (EEPROM) or flash memory. Volatile memory can be random access memory (RAM), which is used as an external cache. By way of examplary illustration, but not limitation, many forms of RAM are available, such as static RAM (SRAM), dynamic RAM (DRAM), synchronous DRAM (SDRAM), double data rate SDRAM (DDR SDRAM, enhanced SDRAM (ESDRAM), synchlink DRAM (SLDRAM) and direct Rambus RAM (DR RAM). It is to be noted that the memory of the systems and methods described herein is intended to include, but is not limited to, these and any other suitable types of memory.

It should be understood that the above described memory is exemplary but not restrictive. For example, the memory in the embodiment of the present disclosure can also be static RAM (SRAM), dynamic RAM (DRAM), synchronous dynamic random access memory (synchronous DRAM (SDRAM), double data rate SDRAM (DDR SDRAM), enhanced SDRAM (ESDRAM), synchronous link DRAM (SLDRAM), direct RAM (DR RAM), etc. That is, the memory in the embodiments of the present disclosure is intended to include, but not limited to, these and any other suitable types of memory.

The embodiments of the present disclosure also provide a computer-readable storage medium for storing computer programs.

Optionally, the computer-readable storage medium can be applied to the first NAN device in the embodiments of the present disclosure, and the running of the computer program enables the computer to perform the corresponding processes implemented by the first NAN device in the various methods of the embodiments of the present disclosure. For the sake of brevity, it will not be elaborated here.

The embodiment of the present disclosure also provides a computer program product, including a computer program instruction.

Optionally, the computer program product can be applied to the first NAN device in the embodiments of the present disclosure, and the running of the computer program instruction enables the computer to perform the corresponding processes implemented by the first NAN device in the various methods of the embodiments of the present disclosure. For the sake of brevity, it will not be elaborated here.

The embodiment of the present disclosure also provides a computer program.

Optionally, the computer program can be applied to the first NAN device in the embodiments of the present disclosure. When the computer program runs on the computer, the computer performs the corresponding processes implemented by the first NAN device in various methods of the embodiments of the disclosure. For the sake of brevity, it will not be elaborated here.

Those of ordinary skill in the art may realize that the units and algorithm steps of the various examples described in combination with the disclosed embodiments herein can be implemented by the combination of electronic hardware, or computer software and electronic hardware. Whether these functions are performed in hardware or software depends on the specific application and design constraints of the technical solution. A professional technician may use different methods to implement the described functions for each specific application, but such implementation shall not be considered beyond the scope of the present disclosure.

Those skilled in the art can clearly understand that for the convenience and simplicity of the description, the specific working process of the system, device and unit described above can refer to the corresponding process in the embodiment of the method described above, and will not be elaborated here.

In several embodiments provided by the present disclosure, it is to be understood that the disclosed systems, devices and methods can be implemented in other ways. For example, the embodiment of the device described above is only schematic. For example, the division of the units is only a logical function division, and there can be another division method in actual implementation, for example, multiple units or components can be combined or integrated into another system, or some features can be ignored or not implemented. On the other hand, the mutual coupling or direct coupling or communication connection illustrated or discussed can be indirect coupling or communication connection through some interfaces, devices or units, and can be electric, mechanical or other forms.

The unit described as a separation part may or may not be physically separated, and the unit displayed as a unit may or may not be a physical unit, that is, it may be located in one place, or it may be distributed to multiple network units. Some or all of the units can be selected according to the actual needs to achieve the purpose of the embodiment.

In addition, each functional unit in each embodiment of the present disclosure may be integrated in one processing unit, each unit may exist physically alone, or two or more units may be integrated in one unit.

If the function is implemented in the form of a software function unit and sold or used as an independent product, it can be stored in a computer readable storage medium. Based on such understanding, the technical solution of the present disclosure in essence or the part contributing to the related art or part of the technical solution may be embodied in the form of software product, which is stored in a storage medium, includes several instructions for enabling a computer device (which can be a personal computer, a server, a network device, etc.) to perform all or part of the steps of the method according to each embodiment of the present disclosure. The aforementioned storage media include: U disk, mobile hard disk, read-only memory (ROM), random access memory (RAM), disk or optical disk and other media that can store program code.

The descriptions above are only the specific embodiments of the present disclosure, and are not intended to limit the scope of protection of the embodiments of the present disclosure. Any change and replacement is easily to think within the technical scope of the embodiments of the present by those skilled in the art, and fall with the protection scope of the present disclosure. Therefore, the scope of protection of the embodiments of the present disclosure shall be subject to the scope of protection of the claims.

## Claims

1. A method for service scheduling, comprising:
determining, by a first Neighbor Awareness Network (NAN) device, at least one first Common Resource Block (CRB) corresponding to a first service based on a service type and/or a first priority of the first service and a second priority of each of at least one CRB of a first NAN data cluster (NDC), wherein the first service is scheduled within the at least one first CRB, the first NAN belongs to the first NDC.

2. The method of claim 1, wherein determining, by the first NAN device, the at least one first CRB corresponding to the first service based on the service type and/or the first priority of the first service and the second priority of each of the at least one CRB comprises:
determining, by the first NAN device, the at least one first CRB based on the type or the first priority of the first service and the second priority of each of the at least one CRB of the first NDC.

3. The method of claim 1 or 2, wherein the service type and/or the first priority are labeled based on at least one of:
first indication information for indicating the service type of the first service, wherein different service types correspond to different first priorities; or
second indication information for indicating whether the first service is a low-latency service, wherein the low-latency service has a highest first priority.

4. The method of any one of claims 1 to 3, wherein the second priority is labeled based on at least one of:
third indication information for indicating a second priority of a corresponding CRB; or
fourth indication information for indicating whether a corresponding CRB is used for a low-latency service, a CRB used for a low-latency having a highest second priority.

5. The method of claim 2, wherein a second priority corresponding to a first priority of at least one service scheduled within a CRB is higher than or equal to the second priority of the CRB.

6. The method of claim 5, wherein when at least two services are scheduled within a CRB, first priorities of different services of the at least two services are same or different.

7. The method of claim 6, wherein when a first priority of a second service of the at least two services is higher than a first priority of a third service of the at least two services, a priority of an access category (AC) of the second service is higher than a priority of an AC of the third service.

8. The method of any one of claims 1 to 7, wherein when one CRB is labeled for low latency service, only low latency service is allowed to be scheduled within the CRB.

9. The method of any one of claims 1 to 7, wherein when the CRB is labeled for a non-low latency service, a service scheduled within the CRB comprises a low latency service and/or a non-low latency service.

10. The method of claim 9, wherein when a service scheduled within the CRB comprises a low-latency service and a non-low-latency service, a priority of an access category (AC) of the low-latency service is higher than or equal to a priority of an AC of the non-low-latency service.

11. The method of any one of claims 1 to 10, wherein the method further comprises:
determining, by the first NAN device, the first NDC according to the service type and/or the first priority of the first service, wherein the first NDC is an NDC to which a first NDL between the first NAN device and a second NAN device belongs, the first service is provided by the first NAN device to the second NAN device, or the first service is provided by the second NAN device to the first NAN device.

12. The method of claim 11, wherein the method further comprises:
sending, by the first NAN device, first information and second information to the second NAN device; or receiving, by the first NAN device, the first information and the second information sent by the second NAN device, wherein the first information is used for indicating the first service, and the second information is used for indicating the service type and/or the first priority of the first service.

13. The method of claim 12, wherein the first information and the second information are carried in a first frame, and the first frame is used for service discovery.

14. The method of claim 12, wherein the second information is located in a service descriptor attribute of the first frame.

15. The method of claim 14, wherein the second information is located in a service information field in the service descriptor attribute.

16. The method of claim 15, wherein the second information comprises at least one of:
first indication information for indicating the service type of the first service, wherein different service types correspond to different first priorities, and the first indication information is located in a first subfield of the service information field; or
second indication information for indicating whether the first service is a low-latency service, wherein the low-latency service has a highest first priority, and the second indication information is located in a second subfield of the service information field.

17. The method of any one of claims 11 to 16, wherein the first NDC is an already established NDC or a newly established NDC.

18. The method of claim 17, wherein a case that the first NDC is the already established NDC comprises:
CRB(s) of the already established NDC comprises a second CRB, and a second priority of the second CRB is lower than or equal to a first target priority, wherein the first target priority is a second priority corresponding to the first priority of the first service.

19. The method of claim 17, wherein a case that the first NDC is the newly established NDC comprises at least one of:
the first NAN device has not joined an already established NDC;
the first NAN device has joined an already established NDC;
the first NAN device has joined an already established NDC, and CRB(s) of the already established NDC comprises a second CRB, wherein a second priority of the second CRB is lower than or equal to a first target priority, and the first target priority is a second priority corresponding to the first priority of the first service; or
the first NAN device has joined an already established NDC, and CRB(s) of the already established NDC does not comprises the second CRB.

20. The method of claim 18 or 19, wherein the already established NDC is used for a first NDL or a second NDL, the second NDL is an NDL between the first NAN device and a third NAN device.

21. The method of claim 20, wherein when the first NDC is the newly established NDC and the first NAN device has joined a second NDC that has been established, and the second NDC is used for the second NDL, a newly added CRB of the first NDC with respect to the second NDC partially overlaps or does not overlap in time domain and/or frequency domain with a CRB of the second NDC.

22. The method of claim 21, wherein when a newly added third CRB of the second NDC with respect to the second NDC partially overlaps in time domain and/or frequency domain with a fourth CRB of the first NDC, a second priority of the fourth CRB is higher than or equal to a second priority of the third CRB.

23. The method of claim 22, wherein when a priority of the fourth CRB is same as a priority of the third CRB, a priority of an AC of a service scheduled within the fourth CRB is higher than a priority of an AC of a service scheduled within the third CRB at an overlapped part of the third CRB and the fourth CRB.

24. The method of any one of claims 11 to 23, wherein the method further comprises:
receiving, by the first NAN device, a second frame sent by the second NAN device, or sending, by the first NAN device, a second frame to the second NAN device, wherein the second frame is used for establishing a first NDP in the first NDL, and the first NDP is used for sending the first service.

25. The method of claim 24, wherein when the first NDC is a newly established NDC, the second frame carries third information and fourth information, wherein the third information is used for indicating a first further availability window (FAW) and the fourth information is used for indicating a second priority of the first FAW, the second priority of the first FAW is a first target priority, and the first target priority is a second priority corresponding to the first priority of the first service.

26. The method of claim 25, wherein the fourth information is carried in an NDC attribute of the second frame.

27. The method of claim 26, wherein the fourth information is carried in a schedule entry field in a schedule entry list of the NDC attribute.

28. The method of claim 27, wherein the fourth information comprises at least one of:
fifth indication information for indicating the priority of the first FAW, wherein the first indication information is located in a first subfield of the schedule entry field; or
sixth indication information for indicating whether the first FAW is used for a low-latency service, wherein a first FAW used for the low-latency service has a highest priority, and the second indication information is located in a second subfield of the schedule entry field.

29. The method of claim 24, wherein when the first NDC is an already established NDC and is used for the first NDL, the second frame does not carry the CRB(s) of the already established NDC; or
when the first NDC is an already established NDC and is used for a second NDL, the second frame carries the CRB(s) of the already established NDC, and the second NDL is an NDL between the first NAN device and a third NAN device.

30. The method of any one of claims 20 to 23 or 29, wherein when the already established NDC is used for a second NDL, the method further comprises:
receiving, by the first NAN device, a CRB of a second NDC sent by the third NAN device, wherein the second NDC is an already established NDC for the second NDL.

31. The method of claim 30, wherein receiving, by the first NAN device, the CRB of the second NDC sent by the third NAN device comprises:
receiving, by the first NAN device, a third frame sent by the third NAN device, wherein the third frame carries the CRB of the second NDC, and the third frame belongs to a broadcast frame.

32. The method of claim 31, wherein the third frame further carries fifth information, the fifth information is used for indicating whether the CRB of the second NDC carried by the third frame is broadcast instead by an NAN control device or a NAN non-control device in a synchronous state.

33. The method of claim 32, wherein when the first NAN device is an NAN control device or an NAN non-control device in a synchronous state, and the fifth information indicates that the CRB of the second NDC carried by the third frame is broadcast instead by the NAN control device or the NAN non-control device in the synchronous state, the method further comprises:
sending, by the first NAN device, a fourth frame, wherein the fourth frame carries the CRB of the second NDC, and the fourth frame belongs to a broadcast frame.

34. The method of claim 32 or 33, wherein the fifth information is located in a first field of an NDC attribute in the third frame.

35. The method of any one of claims 30 to 34, wherein the method further comprises:
when the first NAN device does not receive the CRB of the second NDC for a first number of consecutive discovery windows (DWs), deleting, by the first NAN device, the CRB of the second NDC from local.

36. The method of any one of claims 1 to 35, wherein the method further comprises:
broadcasting, by the first NAN device, a CRB of the first NDC.

37. The method of claim 36, wherein broadcasting, by the first NAN device, the CRB of the first NDC comprises:
sending, by the first NAN device, a fifth frame, wherein the fifth frame carries the CRB of the first NDC, and the fifth frame belongs to a broadcast frame.

38. The method of claim 37, wherein the fifth frame further carries sixth information, the sixth information is used for indicating whether a CRB schedule of the first NDC carried by the fifth frame is broadcast instead by an NAN control device or a NAN non-control device in a synchronous state.

39. The method of claim 38, wherein the sixth information is located in a first field of an NDC attribute in the fifth frame.

40. The method of claim 34 or 39, wherein the first field is a reserved field.

41. The method of any one of claims 31 to 33 and 37, wherein the broadcast frame comprises at least one of:
a service discovery frame;
a proximity aware network action frame (NAF); or
a synchronization beacon frame.

42. A first Neighbor Awareness Network (NAN) device, comprising:
a determination unit, configured to determine at least one first Common Resource Block (CRB) corresponding to a first service based on a service type and/or a first priority of the first service and a second priority of each of at least one CRB of a first NAN data cluster (NDC), wherein the first service is scheduled within the at least one first CRB, and the first NAN belongs to the first NDC.

43. A first Neighbor Awareness Network (NAN) device, comprising: a processor and a memory; wherein the memory is configured to store a computer program, and the processor is configured to call and run the computer program stored in the memory to enable the first NAN device to perform the method of any one of claims 1 to 41.

44. A chip, comprising a processor, wherein the processor is used to call and run a computer program from a memory to enable a device installed with the chip to perform the method of any one of claims 1 to 41.

45. A computer-readable storage medium, configured to store a computer program, wherein running of the computer program enables a computer to perform the method of any one of claims 1 to 41.

46. A computer program product, comprising a computer program instruction, wherein running of the computer program instruction enables a computer to perform the method of any one of claims 1 to 41.

47. A computer program, wherein the computer program enables a computer to perform the method of any one of claims 1 to 41.
